# EUROPEAN PATENT APPLICATION

(11) **EP 4 625 998 A1**
(43) Date of publication of application: **01.10.2025**
(21) Application number: 24788056.0
(22) Date of filing: 09.04.2024
(51) Int. Cl.: H04N 21/234

(54) **END CLOUD COLLABORATION-BASED IMAGE ENHANCEMENT METHOD AND RELATED APPARATUS**

(30) Priority: 11.04.2023 CN 202310414395; 29.07.2023 CN 202310952264
(71) Applicant: Huawei Technologies Co., Ltd., Shenzhen, Guangdong 518129 (CN)
(72) Inventor: ZHOU, Aibin, Shenzhen, Guangdong 518129 (CN)
(74) Representative: Goddar, Heinz J.
(86) International application number: PCT/CN2024/086779
(87) International publication number: WO 2024/212953

(57) **Abstract**

A device-cloud collaborative image enhancement method and a related apparatus are disclosed. The method includes: A server sends first information to an electronic device, where the first information indicates an image enhancement capability supported by the server; the electronic device obtains a to-be-processed first image; the electronic device sends a first request to the server when the first image includes a preset feature; the server performs enhancement processing on the first image based on the first request, to obtain a refined image that is of the first image and that is obtained after processing; and the server sends the refined image of the first image to the electronic device; or the electronic device performs enhancement processing on the first image when the first image does not include the preset feature, to obtain a refined image that is of the first image and that is obtained after processing.

## Description

This application claims priorities to Chinese Patent Application No. 202310414395.9, filed with the China National Intellectual Property Administration on April 11, 2023 and entitled "DEVICE-CLOUD COLLABORATIVE PHOTOGRAPHING METHOD AND RELATED APPARATUS", and to Chinese Patent Application No. 202310952264.6, filed with the China National Intellectual Property Administration on July 29, 2023 and entitled "DEVICE-CLOUD COLLABORATIVE IMAGE ENHANCEMENT METHOD AND RELATED APPARATUS", both of which are incorporated herein by reference in their entireties.

### TECHNICAL FIELD

This application relates to the field of electronic technologies, and in particular, to a device-cloud collaborative image enhancement method and a related apparatus.

### BACKGROUND

As a requirement of a user for photographing increases, an increasingly high requirement is imposed on computing power of a central processing unit (Central Processing Unit, CPU) of a terminal device like a mobile phone in image processing. Due to a hardware limitation, an improvement of application performance of the CPU of the terminal device like the mobile phone is limited.

With development of cloud computing technologies, transferring computing power of a device to a cloud to collaborate with the cloud to process a service on the device is gradually becoming a technology evolution direction. Currently, how to collaborate with the cloud to implement efficient image processing, so as to improve user experience needs to be studied.

### SUMMARY

Embodiments of this application provide a device-cloud collaborative image enhancement method, to collaborate with a cloud to implement efficient image processing and avoid ineffective uploading, so as to effectively improve user experience.

According to a first aspect, this application provides a device-cloud collaborative image enhancement method, applied to a communication system. The communication system includes an electronic device and a server. An image enhancement capability supported by the server is a capability of performing enhancement processing on an image including a preset feature. The method includes: The server sends first information to the electronic device, where the first information indicates the image enhancement capability supported by the server; the electronic device obtains a to-be-processed first image; the electronic device sends a first request to the server when the first image includes the preset feature; the server performs enhancement processing on the first image based on the first request, to obtain a refined image that is of the first image and that is obtained after processing; and the server sends the refined image of the first image to the electronic device; or the electronic device performs enhancement processing on the first image when the first image does not include the preset feature, to obtain a refined image that is of the first image and that is obtained after processing.

Through implementation of this embodiment of this application, the electronic device learns in advance the image enhancement capability supported by the server, and uploads only an image that is within a capability range of a cloud (namely, an image having the preset feature) to the cloud for enhancement processing. This avoids ineffective uploading and a waste of network traffic that are caused because the server does not support performing enhancement processing on an uploaded image, thereby effectively improving user experience.

In an implementation, the preset feature includes at least one of the following: image content of an image belongs to a preset scene supported by the server and an image processing mode used for the image is an image processing mode supported by the server.

In an implementation, the first information includes a detection algorithm plug-in. The detection algorithm plug-in is used to detect whether an image includes the preset feature. Through implementation of this embodiment of this application, the detection algorithm plug-in can be deployed on the server. The plug-in matches the image enhancement capability that can be supported by the server, and is used to detect whether a to-be-processed image is within an image enhancement capability range of the cloud, that is, whether has the preset feature. An APP 1 on a terminal device can dynamically download the plug-in deployed on the server.

In an implementation, the method further includes: The electronic device sends an update request to the server; the server sends a detection algorithm plug-in of a latest version to the electronic device based on the update request; and the electronic device updates the detection algorithm plug-in to the detection algorithm plug-in of the latest version. Through implementation of this embodiment of this application, the detection algorithm plug-in deployed on the server can be updated with the image enhancement capability supported by the server. The APP 1 on the terminal device can also update the plug-in periodically or in a specific scenario. In this manner of independently updating the detection algorithm plug-in, that an application version of the APP 1 needs to be updated when the image enhancement capability supported by the server changes (that is, when the preset feature changes) can be avoided. This reduces maintenance costs of a device-cloud collaborative image enhancement solution.

In an implementation, that the electronic device obtains the to-be-processed first image includes: In response to a first photographing operation of a user, the electronic device obtains the first image captured by a camera. Through implementation of this embodiment of this application, when using the camera to take a photo, the electronic device uploads, to the cloud for enhancement processing, only a photo (for example, the first image) including the preset feature and that is taken by the camera. This avoids ineffective uploading and a waste of network traffic that are caused because the server does not support performing enhancement processing on an uploaded photo.

In an implementation, the first image is a raw image captured by the camera, or the first image is an image obtained after image processing (for example, initial image processing) is performed on the raw image. When the first image uploaded to the server is the raw image, that the server performs enhancement processing on the image includes: performing initial image processing on the image.

In an implementation, the method further includes: The electronic device obtains a low-resolution image corresponding to the raw image captured by the camera, and when detecting that the low-resolution image includes the preset feature, determines that the first image includes the preset feature. Through implementation of this embodiment of this application, compared with those for the raw image, complexity of an algorithm and duration that are required for detecting whether the low-resolution image includes the preset feature are lower and shorter.

In an implementation, before the electronic device obtains the to-be-processed first image, the method further includes: The electronic device displays a preview interface of a first application, where the preview interface is used to display a preview image, and the preview image is obtained based on a second image captured by the camera; the electronic device displays first prompt information in the preview interface when the second image captured by the camera includes the preset feature; and the electronic device receives the first photographing operation when displaying the first prompt information. Through implementation of this embodiment of this application, the user can perceive, in advance by using the first prompt information, that the server can perform enhancement processing on the taken photo. This effectively improves user experience.

In an implementation, the preview interface includes a first photographing control. The first prompt information includes a second photographing control. The first photographing operation includes an input operation performed on the second photographing control. The method further includes: The electronic device receives a second photographing operation performed on the first photographing control; and in response to the second photographing operation, the electronic device obtains a third image captured by the camera, and the electronic device performs enhancement processing on the third image, to obtain a refined image that is of the third image and that is obtained after processing. Through implementation of this embodiment of this application, the first prompt information is presented as the second photographing control. In this way, the user can perceive in advance that the server can perform enhancement processing on the image. The second photographing control and the first photographing control are provided for the user for selection. Taking a photo by using the second photographing control can trigger uploading of the photo to the server for processing, and taking a photo by using the first photographing control can trigger the device to perform local processing on the photo.

In an implementation, the preview interface includes a first photographing control. The first photographing control is used to trigger the first application to take an image. The first prompt information is superimposed and displayed on the first photographing control. The first photographing operation includes an input operation performed on the first photographing control. Through implementation of this embodiment of this application, the first prompt information can be presented as a cloud identifier displayed on the photographing control, so that the user perceives in advance that the server can perform enhancement processing on the image.

In an implementation, before the electronic device displays the first prompt information in the preview interface, the method further includes: The first application starts a cloud camera in response to a first input operation. That the electronic device displays the first prompt information in the preview interface when the second image captured by the camera includes the preset feature includes: When the cloud camera is started, the electronic device displays the first prompt information in the preview interface when the second image captured by the camera includes the preset feature. Through implementation of this embodiment of this application, whether the second image captured by the camera includes the preset feature is detected only when the cloud camera is started. In this way, a subsequent solution is implemented only when the user has a requirement. This effectively improves user experience.

In an implementation, after the first application displays the first prompt information, the method further includes: switching a photographing mode to a cloud photo mode. The first photographing operation is a photographing operation in the cloud photo mode. Through implementation of this embodiment of this application, based on the first prompt information, the user can autonomously choose to take a photo in the cloud photo mode or a non-cloud photo mode. In the cloud photo mode, the taken photo is uploaded to the server for enhancement processing.

In an implementation, the electronic device is provided with a plurality of image processing modes used to optimize an image captured by the camera. The plurality of image processing modes include a first image processing mode. The preview interface includes a first processing control corresponding to the first image processing mode. Before the first photographing operation is received, the method further includes: The electronic device receives a second input operation performed on the first processing control; and in response to the second input operation, the electronic device determines that an image processing mode used for an image currently captured by the camera includes the first image processing mode, where an image processing mode used for the first image includes the first image processing mode. The image processing modes in this application include some or all of the following: a photographing mode, a filter, a special effect, a light effect, beauty, makeup, body beauty, and the like.

In an implementation, the electronic device stores the first image. The electronic device is provided with a plurality of image processing modes used to optimize a local image. The plurality of image processing modes include a second image processing mode. The method further includes: The electronic device displays, in a second interface, the first image and a second processing control corresponding to the second image processing mode; and the electronic device receives a third input operation performed on the second processing control. That the electronic device sends the first request to the server when the first image includes the preset feature includes: The electronic device sends the first request to the server in response to the third input operation when the first image includes the preset feature, where an image processing mode used for the first image includes the second image processing mode. Through implementation of this embodiment of this application, when editing the local image by using the electronic device, a user uploads, to the cloud for enhancement processing, only a to-be-edited image (for example, the first image) including the preset feature. This avoids ineffective uploading and a waste of network traffic that are caused because the server does not support performing enhancement processing on a to-be-edited image.

In an implementation, when the first image includes the preset feature, the electronic device further displays second prompt information on the second interface along with the first image. The second prompt information is used to prompt that the server supports performing enhancement processing on the first image. Through implementation of this embodiment of this application, the user can perceive, in advance by using the second prompt information, that the server can perform enhancement processing on the to-be-edited local image. This effectively improves user experience.

In an implementation, the plurality of image processing modes further include a third image processing mode. The second interface further includes a third processing control corresponding to the third image processing mode. The first information indicates the image processing mode supported by the server. The server supports the second image processing mode. A first identifier is displayed on the second processing control. The server does not support the third image processing mode. The first identifier is not displayed on the third processing control. The first identifier indicates the image processing mode supported by the server. Through implementation of this embodiment of this application, the first identifier is displayed on/around a processing control corresponding to the image processing mode supported by the server, to indicate that the server supports the image processing mode corresponding to the processing control.

In an implementation, when the server supports the second image processing mode, and image content of the first image belongs to the preset scene supported by the server, the first identifier is displayed on the second processing control. Through implementation of this embodiment of this application, when image content of the to-be-edited image (for example, the first image) belongs to the preset scene supported by the server, the first identifier is displayed on/around the processing control corresponding to the image processing mode supported by the server, to indicate an image processing mode supported by the server for the to-be-edited image.

In an implementation, the first request indicates the image processing mode used for the first image. That the server performs enhancement processing on the first image based on the first request, to obtain the refined image of the first image includes: The server performs enhancement processing on the first image in the image processing mode used for the first image, to obtain the refined image of the first image.

In an implementation, the image processing mode supported by the server includes a fourth image processing mode and a fifth image processing mode. A preset scene supported by the server in the fourth image processing mode is different from a preset scene supported by the server in the fifth image processing mode. The first information indicates a correspondence between the image processing mode and the preset scene that are supported by the server. Through implementation of this embodiment of this application, the server can support different preset scenes in different image processing modes.

In an implementation, the preset feature includes: A sixth image processing mode used for the image is the image processing mode supported by the server, and the image content of the image belongs to a preset scene corresponding to the sixth image processing mode supported by the server.

According to a second aspect, this application provides a device-cloud collaborative image enhancement method, applied to an electronic device. The method includes: The electronic device obtains first information sent by a server, where the first information indicates an image enhancement capability supported by the server, and the image enhancement capability supported by the server includes a capability of performing enhancement processing on an image having a preset feature; the electronic device obtains a to-be-processed first image; the electronic device sends a first request to the server when the first image includes the preset feature; and the electronic device receives a refined image that is of the first image and that is sent by the server, where the refined image of the first image is an image obtained after the server performs enhancement processing on the first image based on the first request; or the electronic device performs enhancement processing on the first image when the first image does not include the preset feature, to obtain a refined image that is of the first image and that is obtained after processing.

Through implementation of this embodiment of this application, the electronic device learns in advance the image enhancement capability supported by the server, and uploads only an image that is within a capability range of a cloud (namely, an image having the preset feature) to the cloud for enhancement processing. This avoids ineffective uploading and a waste of network traffic that are caused because the server does not support performing enhancement processing on an uploaded image, thereby effectively improving user experience.

In an implementation, the preset feature includes at least one of the following: image content of an image belongs to a preset scene supported by the server and an image processing mode used for the image is an image processing mode supported by the server.

In an implementation, the first information includes a detection algorithm plug-in. The detection algorithm plug-in is used to detect whether an image includes the preset feature.

In an implementation, the method further includes: The electronic device sends an update request to the server; the electronic device receives a detection algorithm plug-in of a latest version sent by the server; and the electronic device updates the detection algorithm plug-in to the detection algorithm plug-in of the latest version.

In an implementation, that the electronic device obtains the to-be-processed first image includes: In response to a first photographing operation of a user, the electronic device obtains the first image captured by a camera.

In an implementation, the first image is a raw image captured by the camera, or the first image is an image obtained after image processing is performed on the raw image.

In an implementation, before the electronic device obtains the to-be-processed first image, the method further includes: The electronic device displays a preview interface of a first application, where the preview interface is used to display a preview image, and the preview image is obtained based on a second image captured by the camera; the electronic device displays first prompt information in the preview interface when the second image captured by the camera includes the preset feature; and the electronic device receives the first photographing operation when displaying the first prompt information.

In an implementation, the preview interface includes a first photographing control. The first prompt information includes a second photographing control. The first photographing operation includes an input operation performed on the second photographing control. The method further includes: The electronic device receives a second photographing operation performed on the first photographing control; and in response to the second photographing operation, the electronic device obtains a third image captured by the camera, and the electronic device performs enhancement processing on the third image, to obtain a refined image that is of the third image and that is obtained after processing.

In an implementation, the preview interface includes a first photographing control. The first photographing control is used to trigger the first application to take an image. The first prompt information is superimposed and displayed on the first photographing control. The first photographing operation includes an input operation performed on the first photographing control.

In an implementation, before the electronic device displays the first prompt information in the preview interface, the method further includes: The first application starts a cloud camera in response to a first input operation. That the electronic device displays the first prompt information in the preview interface when the second image captured by the camera includes the preset feature includes: When the cloud camera is started, the electronic device displays the first prompt information in the preview interface when the second image captured by the camera includes the preset feature.

In an implementation, the electronic device is provided with a plurality of image processing modes used to optimize an image captured by the camera. The plurality of image processing modes include a first image processing mode. The preview interface includes a first processing control corresponding to the first image processing mode. Before the first photographing operation is received, the method further includes: The electronic device receives a second input operation performed on the first processing control; and in response to the second input operation, the electronic device determines that an image processing mode used for an image currently captured by the camera includes the first image processing mode, where an image processing mode used for the first image includes the first image processing mode.

In an implementation, the electronic device stores the first image. The electronic device is provided with a plurality of image processing modes used to optimize a local image. The plurality of image processing modes include a second image processing mode. The method further includes: The electronic device displays, in a second interface, the first image and a second processing control corresponding to the second image processing mode; and the electronic device receives a third input operation performed on the second processing control. That the electronic device sends the first request to the server when the first image includes the preset feature includes: The electronic device sends the first request to the server in response to the third input operation when the first image includes the preset feature, where an image processing mode used for the first image includes the second image processing mode.

In an implementation, the plurality of image processing modes further include a third image processing mode. The second interface further includes a third processing control corresponding to the third image processing mode. The first information indicates the image processing mode supported by the server. The server supports the second image processing mode. A first identifier is displayed on the second processing control. The server does not support the third image processing mode. The first identifier is not displayed on the third processing control. The first identifier indicates the image processing mode supported by the server.

In an implementation, the image processing mode supported by the server includes a fourth image processing mode and a fifth image processing mode. A preset scene supported by the server in the fourth image processing mode is different from a preset scene supported by the server in the fifth image processing mode. The first information indicates a correspondence between the image processing mode and the preset scene that are supported by the server.

According to a third aspect, this application provides a device-cloud collaborative image enhancement method, applied to a server. An image enhancement capability supported by the server is a capability of performing enhancement processing on an image having a preset feature. The method includes: The server sends first information to an electronic device, where the first information indicates the image enhancement capability supported by the server; the server receives a first request sent by the electronic device, where the first request includes a first image, and the first image includes the preset feature; the server performs enhancement processing on the first image based on the first request, to obtain a refined image that is of the first image and that is obtained after processing; and the server sends the refined image of the first image to the electronic device.

Through implementation of this embodiment of this application, the electronic device learns in advance the image enhancement capability supported by the server, and uploads only an image that is within a capability range of a cloud (namely, an image having the preset feature) to the cloud for enhancement processing. This avoids ineffective uploading and a waste of network traffic that are caused because the server does not support performing enhancement processing on an uploaded image, thereby effectively improving user experience.

In an implementation, the preset feature includes at least one of the following: image content of an image belongs to a preset scene supported by the server and an image processing mode used for the image is an image processing mode supported by the server.

In an implementation, the first information includes a detection algorithm plug-in. The detection algorithm plug-in is used to detect whether an image includes the preset feature.

In an implementation, the method further includes: The server receives an update request sent by the electronic device; and the server sends a detection algorithm plug-in of a latest version to the electronic device based on the update request.

In an implementation, the first image is a raw image captured by the camera of the electronic device, or the first image is an image obtained after image processing is performed on the raw image.

In an implementation, the first request indicates the image processing mode used for the first image. That the server performs image processing on the first image based on the first request, to obtain the refined image of the first image includes: The server performs image processing on the first image in the image processing mode used for the first image, to obtain the refined image of the first image.

In an implementation, the image processing mode supported by the server includes a fourth image processing mode and a fifth image processing mode. A preset scene supported by the server in the fourth image processing mode is different from a preset scene supported by the server in the fifth image processing mode. The first information indicates a correspondence between the image processing mode and the preset scene that are supported by the server.

According to a fourth aspect, an embodiment of this application provides an electronic device. The electronic device includes a processor and a memory. The memory is coupled to the processor. The memory is configured to store computer program code. The computer program code includes computer instructions. When the processor reads the computer instructions from the memory, the electronic device is enabled to perform the device-cloud collaborative image enhancement method according to the second aspect.

According to a fifth aspect, an embodiment of this application provides a server. The server includes a processor and a memory. The memory is coupled to the processor. The memory is configured to store computer program code. The computer program code includes computer instructions. When the processor reads the computer instructions from the memory, the server is enabled to perform the device-cloud collaborative image enhancement method according to the third aspect.

According to a sixth aspect, an embodiment of this application provides a computer storage medium, including computer instructions. When the computer instructions are run on an electronic device, a communication apparatus is enabled to perform the device-cloud collaborative image enhancement method according to any possible implementation of any one of the foregoing aspects.

According to a seventh aspect, an embodiment of this application provides a computer program product. When the computer program product runs on a computer, the computer is enabled to perform the device-cloud collaborative image enhancement method according to any possible implementation of any one of the foregoing aspects.

### BRIEF DESCRIPTION OF DRAWINGS

FIG. 1 is a diagram of a system architecture of a communication system according to an embodiment of this application;
FIG. 2 is a diagram of a system architecture of a device-cloud collaborative image enhancement system according to an embodiment of this application;
FIG. 3A to FIG. 3L show user interfaces related to an image enhancement capability in a photographing scenario according to an embodiment of this application;
FIG. 4A to FIG. 4F show an interface embodiment in a photographing scenario according to an embodiment of this application;
FIG. 5A and FIG. 5B show another interface embodiment in a photographing scenario according to an embodiment of this application;
FIG. 6A to FIG. 6C show another interface embodiment in a photographing scenario according to an embodiment of this application;
FIG. 7 shows another interface embodiment in a photographing scenario according to an embodiment of this application;
FIG. 8A to FIG. 8C are a flowchart of a device-cloud collaborative image enhancement method according to an embodiment of this application;
FIG. 9A to FIG. 9H show an interface embodiment in an image editing scenario according to an embodiment of this application;
FIG. 10A and FIG. 10B are a flowchart of another device-cloud collaborative image enhancement method according to an embodiment of this application;
FIG. 11 is a flowchart of a device-cloud collaborative image enhancement method according to an embodiment of this application;
FIG. 12 is a diagram of a structure of a terminal device according to an embodiment of this application; and
FIG. 13 is a diagram of a structure of a server according to an embodiment of this application.

### DESCRIPTION OF EMBODIMENTS

With reference to the accompanying drawings, the following clearly describes in detail the technical solutions in embodiments of this application. In the descriptions of embodiments of this application, "/" indicates "or" unless otherwise specified. For example, A/B may indicate A or B. The term "and/or" in this specification describes merely an association relationship between associated objects, and indicates that three relationships may exist. For example, A and/or B may indicate the following three cases: Only A exists, both A and B exist, and only B exists. In addition, in the descriptions of embodiments of this application, "a plurality of" means two or more.

In the following descriptions, the terms "first" and "second" are merely intended for a purpose of description, and shall not be interpreted as an implication or implication of relative importance or implicit indication of a quantity of indicated technical features. Therefore, a feature limited by "first" and "second" may explicitly or implicitly include one or more features. In the descriptions of embodiments of this application, unless otherwise specified, "a plurality of" means two or more.

The term "user interface (user interface, UI)" in the following embodiments of this application is a medium interface for interaction and information exchange between an application or an operating system and a user, and implements conversion between an internal form of information and a form that can be accepted by the user. The user interface is source code written in a specific computer language, for example, Java or an extensible markup language (extensible markup language, XML). The interface source code is parsed and rendered on an electronic device, and is finally presented as content that can be identified by the user. A frequently-used representation form of the user interface is a graphical user interface (graphical user interface, GUI), and is a user interface that is displayed in a graphical manner and that is related to a computer operation. The user interface may be a visual interface element like a text, an icon, a button, a menu, a tab, a text box, a dialog box, a status bar, a navigation bar, or a widget that is displayed on a display of the electronic device.

During photographing by a camera, an optical image generated from a scene through a lens (Lens) is projected onto a surface of an image sensor, is converted into an analog electrical signal through photoelectric conversion, and is converted into a digital image signal through analog-to-digital conversion (A/D). The digital image signal is sent to a digital signal processor (DSP) for initial image processing, and data in a YUV (or RGB) format, namely, a visible jpeg/jpg image, is output. Then, the image is transmitted to a CPU through an I/O interface. The jpeg/jpg image may be displayed through a display. For example, the foregoing initial image processing includes some or all of the following: black level compensation (black level compensation), lens correction (lens shading correction), bad pixel correction (bad pixel correction), color interpolation (demosaic), Bayer noise removal, white balance (awb) correction, color correction (color correction), gamma correction, color space conversion (conversion from RGB into YUV), color noise removal and edge enhancement in a YUV color space, color and contrast enhancement, automatic exposure control, and the like.

During photographing by the camera, if the user further selects one or more image processing modes (for example, a photographing mode, a filter, and beauty), after the jpeg/jpg image is transmitted to the CPU, the CPU further needs to perform image processing on the jpeg/jpg image based on the image processing mode selected by the user. For a local image in an album, the CPU may also edit the image based on an image processing mode (for example, photo restoration or the filter) selected by the user. To reduce a computing power requirement on and a load of the CPU, embodiments of this application provide a device-cloud collaborative image enhancement method, to collaborate with a cloud to perform image processing on a photo taken in real time or the local image, so as to implementing efficient image processing, and effectively improving user experience.

In embodiments of this application, a digital image signal that is not processed by the DSP may be referred to as raw data/a raw image. It may be understood that the raw data is a digital negative of information about an original image captured by the camera, does not undergo image processing and compression, records some metadata generated during photographing by the camera, for example, information such as an ISO setting, a shutter speed, an F-number, and a white balance, and includes richer information compared with the jpeg/jpg image.

The following describes a communication system 10 related to the device-cloud collaborative image processing method provided in embodiments of this application.

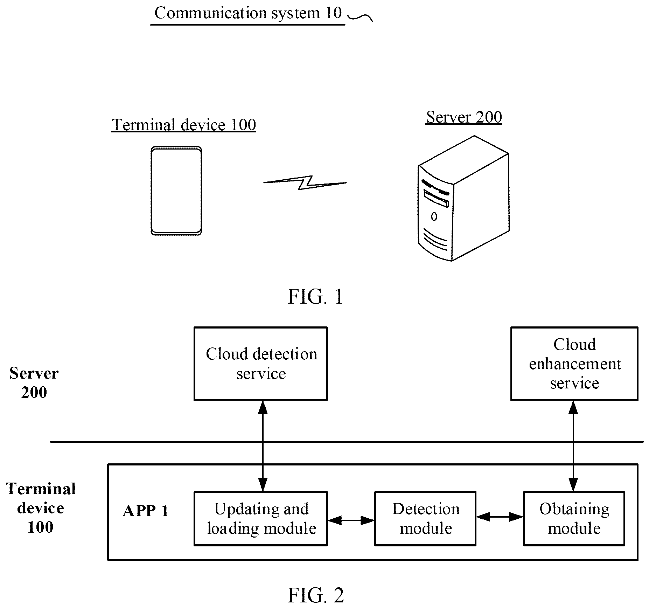

FIG. 1 shows an example of a system architecture of the communication system 10 according to an embodiment of this application. As shown in FIG. 1, the communication system 10 includes a terminal device 100 and a server 200. The terminal device 100 may communicate with the server 200 through a communication network.

The communication network may include a local area network (local area network, LAN) and/or a wide area network (wide area network, WAN). The communication network may be implemented using any known network communication protocol. The network communication protocol may be various wired or wireless communication protocols, such as Ethernet, a universal serial bus (universal serial bus, USB), a firewire (FIREWIRE), a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), Bluetooth, wireless fidelity (wireless fidelity, Wi-Fi), NFC, a voice over internet protocol (voice over Internet protocol, VoIP), a communication protocol that supports a network slicing architecture, or any other suitable communication protocol.

The terminal device 100 may be a mobile phone, a tablet computer, a desktop computer, a laptop computer, a handheld computer, a notebook computer, an ultra-mobile personal computer (ultra-mobile personal computer, UMPC), or a netbook, or may be a cellular phone, a personal digital assistant (personal digital assistant, PDA), an augmented reality (augmented reality, AR) device, a virtual reality (virtual reality, VR) device, an artificial intelligence (artificial intelligence, AI) device, a wearable device (for example, a smart band), a vehicle-mounted device, a smart home device (for example, a smart television, a smart screen, or a large-screen device), and/or a smart city device. A specific type of the terminal device 100 is not specially limited in embodiments of this application.

The server 200 may be a server, a server cluster including a plurality of servers, or a cloud computing center. The server 200 in this embodiment of this application may also be referred to as a cloud server, a cloud, or a cloud side.

It should be understood that FIG. 1 is merely a diagram of a system structure of the communication system provided in embodiments of this application, and does not constitute a specific limitation on the communication system 10. The communication system 10 may include more or fewer devices than those shown in the figure, and for example, may further include a wireless relay device and a wireless backhaul device (not shown in FIG. 1). This is not limited herein.

In a device-cloud collaborative image enhancement solution provided in embodiments of this application, after an APP 1 on the terminal device 100 takes a photo through a camera, a user may view the taken photo. If the user is not satisfied with the photo, the user edits the photo in at least one image processing mode provided by the APP 1. The terminal device 100 may upload the photo to the server 200, and the server 200 performs enhancement processing on the photo based on the image processing mode selected by the user. The server 200 returns a refined image that is of the photo and that is obtained after processing to the terminal device 100. The user determines the refined image fed back by the server 200. If a processing effect meets a requirement of the user, the refined image is saved and used (for example, shared with another person). If the processing effect does not meet the requirement of the user, the user may not save the refined image or delete the refined image.

The foregoing solution can collaborate with the cloud to perform enhancement processing on the photo, to reduce a computing power requirement on and a load of a CPU on a device. However, the solution further has the following defects: If the uploaded photo is not within an image enhancement capability range of the cloud, an enhancement processing effect of the cloud is generally poor, which wastes operation time of the user and network transmission traffic, and affects user experience; the image enhancement capability range of the cloud is limited, and before the photo is uploaded to the cloud, a user cannot predict whether the cloud can process the photo, and a result is unknown, which affects a use desire of the user; and after photographing, when the user triggers enhancement processing, there are a large quantity of processing steps, resulting in poor user experience.

In another device-cloud collaborative image enhancement solution provided in embodiments of this application, a detection algorithm plug-in is deployed on the server 200. The plug-in matches an image enhancement capability supported by the cloud, and is used to detect whether a to-be-processed image is within an image enhancement capability range of the cloud. An APP 1 on the terminal device 100 may dynamically download and update the plug-in deployed on the cloud. When the APP 1 on the terminal device 100 starts photographing or edits a local image, the plug-in may be started for detection. When it is detected that the to-be-processed image is within the image enhancement capability range of the cloud, prompt information 1 is displayed, and the to-be-processed image may be uploaded to the server 200 for enhancement processing. The server 200 returns a refined image obtained after enhancement processing to the terminal device 100. The prompt information 1 indicates that the to-be-processed image is within the image enhancement capability range of the cloud.

The foregoing solution can collaborate with the cloud to perform image processing on the photo, to reduce a computing power requirement on and a load of a CPU on a device In addition, the following beneficial effect is further achieved: Only an image within the capability range of the cloud may be uploaded to the cloud for enhancement processing through detection and filtering performed by the detection algorithm plug-in in advance, to avoid ineffective uploading and a waste of network traffic caused because the cloud does not support performing enhancement processing on an uploaded image; the prompt information 1 may enable a user to perceive in advance that the cloud can process the image, to improve user experience; and when a photo is taken, the image within the capability range of the cloud may be uploaded to the cloud in real time for enhancement processing, to avoid a complex user operation caused when enhancement processing is performed on the image after the photo is taken.

In addition, in the foregoing solution, the detection algorithm plug-in deployed on the cloud may be updated with the image enhancement capability supported by the cloud. The APP 1 on the terminal device 100 may download an updated detection algorithm plug-in through a network. In this manner of independently updating the detection algorithm plug-in, that an application version of the APP 1 needs to be updated when the image enhancement capability supported by the cloud changes can be avoided, to reduce maintenance costs of the device-cloud collaborative image enhancement solution.

It should be noted that, in embodiments of this application, performing enhancement processing on the to-be-processed image means performing image processing on the to-be-processed image based on an image processing algorithm/model indicated by an image retouching parameter used by the to-be-processed image, to modify a display effect of the image, so as to meet a specific requirement of the user on the display effect of the image, for example, improving overall definition/texture of the image, modifying an overall light effect of the image, modifying a display style of the image, or modifying a display effect of a specific object (for example, a portrait) in the image. An image obtained after enhancement processing is performed on the to-be-processed image may be referred to as a refined image of the to-be-processed image for short.

For example, FIG. 2 shows a system architecture of a device-cloud collaborative image enhancement system. As shown in the figure, the terminal device 100 includes the APP 1. The APP 1 includes an obtaining module, an updating and loading module, and a detection module. The server 200 includes a cloud detection service and a cloud enhancement service.

The cloud detection service is used to deploy a detection algorithm plug-in matching an image enhancement capability supported by the cloud and provide download and update services of the detection algorithm plug-in for a device.

The cloud enhancement service is used to provide an image enhancement service for the device, and specifically, is used to obtain a to-be-processed image and an image retouching parameter that are uploaded by the device, and perform image processing on the to-be-processed image based on an image processing algorithm/model indicated by the image retouching parameter.

The updating and loading module of the device is used to download and update the detection algorithm plug-in from the cloud detection service.

The obtaining module of the device is used to obtain the to-be-processed image.

The detection module of the device is used to identify, using the detection algorithm plug-in, whether the to-be-processed image is within the image enhancement capability range of the cloud.

The obtaining module of the device is further used to upload a to-be-processed image within the image enhancement capability range of the cloud to the cloud for enhancement processing, and store, for viewing by a user, a refined image that is fed back by the cloud and that is obtained after enhancement processing.

The device-cloud collaborative image processing method provided in embodiments of this application is applicable to the following two application scenarios. In an application scenario 1, the to-be-processed image is an image captured by a camera in real time. In an application scenario 2, the to-be-processed image is a to-be-edited local image taken in non-real time. The local image may be a photo taken by the terminal device 100 before, or may be an image obtained by the terminal device 100 in another manner, for example, an image sent by another device, an image obtained through a screenshot, or an image downloaded from a web page. This is not specifically limited herein.

In addition to the foregoing two application scenarios, the device-cloud collaborative image processing method provided in embodiments of this application may be further applied to another application scenario in which an image needs to be uploaded to the cloud for enhancement processing. This is not specifically limited herein.

The following separately describes the foregoing two application scenarios, and describes in detail the device-cloud collaborative image enhancement method with reference to the application scenarios.

The application scenario 1 is a photographing scenario, where the to-be-processed image is the image captured by the camera in real time.

In some embodiments, when the APP 1 on the terminal device 100 starts photographing, whether the image captured by the camera is within the image enhancement capability range of the cloud is detected in real time. If the image is within the image enhancement capability range, the prompt information 1 is displayed, to prompt the user that the image currently captured by the camera is within the image enhancement capability range of the cloud. After a photographing operation 1 of the user is detected, the camera takes a photo 1, and the photo 1 is uploaded to the cloud for enhancement processing.

In some embodiments, after the photo 1 is taken, if it is determined that an image recently captured by the camera is within the image enhancement capability range of the cloud, the photo 1 may be automatically uploaded to the cloud for enhancement processing. In some embodiments, after the photo 1 is taken, the terminal device 100 needs to detect whether the photo 1 is within the image enhancement capability range of the cloud, and uploads the photo 1 to the cloud for enhancement processing only if the photo 1 is within the image enhancement capability range of the cloud.

The APP 1 may be a system camera APP on the terminal device 100, or may be another system application or a third-party application that has a photographing function, for example, an instant messaging application that has the photographing function. This is not specifically limited herein.

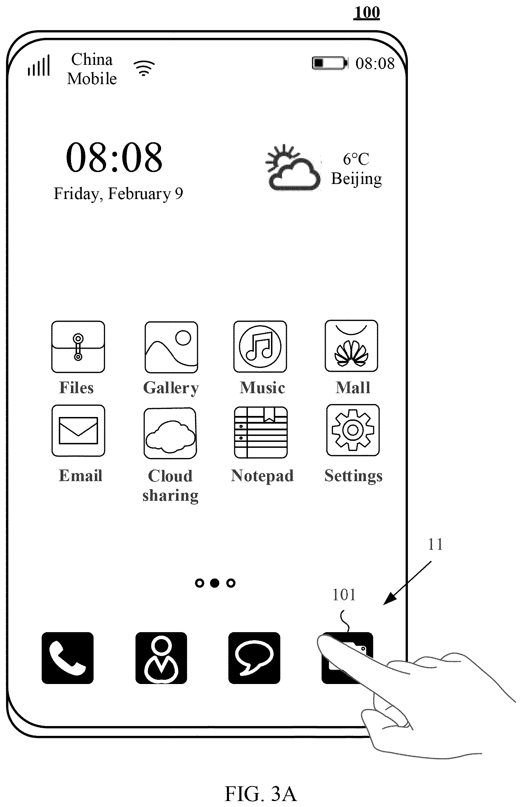

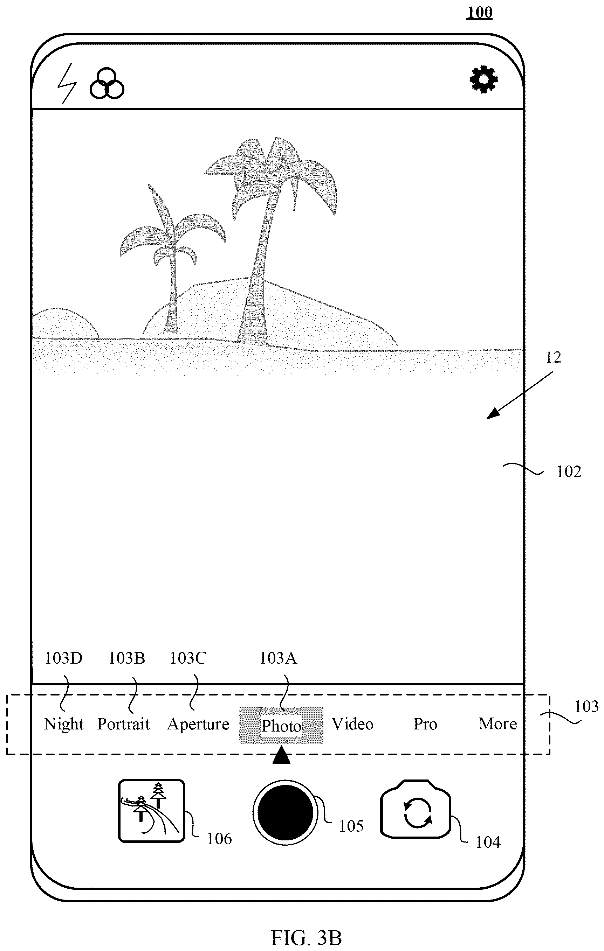

For example, the APP 1 is a camera application. FIG. 3A and FIG. 3B show user interfaces for starting the camera application for photographing.

FIG. 3A shows a home screen 11 used to display an installed application (application, APP). The camera APP is installed on the terminal device 100. An application icon 101 of the camera APP may be displayed on the home screen 11. As shown in FIG. 3A and FIG. 3B, after it is detected that the user taps the application icon 101, the terminal device 100 displays a preview interface 12 of the camera APP.

The preview interface 12 includes a preview box 102, a photographing mode bar 103, a camera switching control 104, a photographing control 105, and an album control 106. The preview box 102 is used to display a preview image captured by the camera of the terminal device 100 in a specific photographing mode. The photographing mode bar 103 is used to select a photographing mode. For example, the photographing mode bar 103 includes a photo mode 103A, a portrait mode 103B, an aperture mode 103C, a night mode 103D, and a pro mode. The camera switching control 104 is used to switch a camera that currently captures the image. The photographing control 105 may receive an input operation (for example, a touch operation) of the user. In response to the input operation, the camera APP may take a photo in a current photographing mode and save the photo. The album control 106 is used to view a taken photo.

In some embodiments, after the camera captures a raw image, initial image processing is performed on the raw image to generate a jpg/jepg image. The jpg/jepg image may be displayed in the preview box 102 as a preview image.

In some embodiments, the camera APP provides a plurality of image processing modes, to optimize the image captured by the camera. For example, the image processing modes related to photographing of the camera APP include a preset photographing mode (for example, the portrait mode, the night mode, the aperture mode, or a high dynamic range (High Dynamic Range, HDR) mode). In the preset photographing mode, some or all of the following image processing modes may be further superimposed: a filter, a light effect, beauty, a special effect, makeup, body beauty, and the like. If the user selects one or more image processing modes (for example, the preset photographing mode, the filter, and the special effect) for the currently taken image, the camera APP may perform enhancement processing on the jpg/jpeg image in the one or more image processing modes, and display, in the preview box 102 as a preview image, a refined image obtained after enhancement processing.

In some embodiments, the camera APP may obtain an image retouching parameter used when the image is taken, and perform, based on the image retouching parameter, enhancement processing on the image taken by the camera. The image retouching parameter indicates one or more image processing modes in the photographing mode, a light effect option, a filter option, a beauty option, a special effect option, a makeup option, a body beauty option, and the like that are used to take the image. For example, one photographing mode (for example, the portrait mode) may correspond to one image processing mode, and one filter option (for example, a landscape filter) may also correspond to one image processing mode. An image processing algorithm/model corresponding to each image processing mode is not specifically limited in embodiments of this application.

In some embodiments, after the preview interface 12 is started, the camera APP of the terminal device 100 invokes the detection algorithm plug-in to detect in real time whether an original image (for example, an original image 1) captured by the camera is within the image enhancement capability range of the cloud, and may display, in the preview box 102, a preview image corresponding to the original image 1. The original image 1 may be a raw image captured by the camera, or may be a jpg/jepg image obtained after initial image processing is performed on the raw image. The preview image corresponding to the original image 1 may be the jpg/jepg image, or may be a refined image obtained after enhancement processing is performed on the jpg/jepg image.

In an implementation, when the camera APP invokes the camera to capture the image, two images are generated. One image is a low-resolution image generated based on a raw image captured by the camera, and the low-resolution image is used to detect whether the image captured by the camera is within the image enhancement capability range of the cloud. The other image is a jpg/jpeg image obtained after initial image processing is performed on the raw image, and is used to determine a preview image to be displayed in the preview box 102. It should be noted that, compared with those for the raw image and the jpg/jpeg image, complexity of an algorithm and duration that are required by the detection algorithm plug-in to detect whether the low-resolution image is within the image enhancement capability range of the cloud are lower and shorter.

In some embodiments, the original image (for example, the raw image) and the preview image that are captured by the camera include a same taken picture, and correspond to a same image retouching parameter. When the original image is within the image enhancement capability range of the cloud, the preview image corresponding to the original image is also within the image enhancement capability range of the cloud.

For the application scenario 1, the following describes in detail an image enhancement capability supported by the cloud and how to detect whether the image is within the image enhancement capability range of the cloud.

In some embodiments, the image enhancement capability supported by the cloud includes a capability of performing enhancement processing on one or more preset scenes supported by the cloud. If it is detected that image content of the original image 1 captured by the camera belongs to the preset scene supported by the cloud, the original image 1 is within the image enhancement capability range of the cloud. For example, a preset scene 1 is one of the one or more preset scenes.

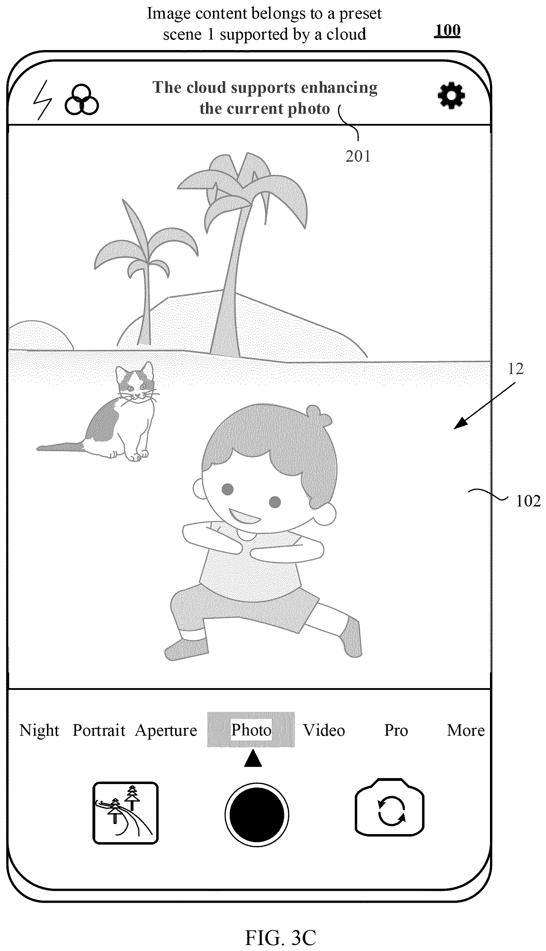

In some embodiments, the preset scene 1 indicates a preset type of photographed object, for example, a portrait, a preset type of animal (for example, a dog or a cat), a preset type of article (for example, a car), a preset type of plant (for example, a flower), a preset type of weather (for example, a snowy day or a rainy day), or a preset type of natural environment (for example, a beach or a forest). For example, the preset scene supported by the cloud indicates only a portrait, but does not indicate another type of photographed object. To be specific, the cloud supports performing enhancement processing on a portrait in the image, but does not support performing enhancement processing on the another type of photographed object in the image. After it is detected that a raw image corresponding to a preview image shown in FIG. 3B does not include a portrait, it is determined that image content of the image does not belong to the preset scene supported by the cloud. After it is detected that a raw image corresponding to a preview image shown in FIG. 3C includes a portrait, it is determined that image content of the image belongs to the preset scene supported by the cloud.

In an implementation, when the detection algorithm plug-in detects that a photographed object in the image includes the preset type of photographed object indicated by the preset scene 1, it is determined that the image content of the original image 1 belongs to the preset scene 1, and the original image 1 is within the image enhancement capability range of the cloud.

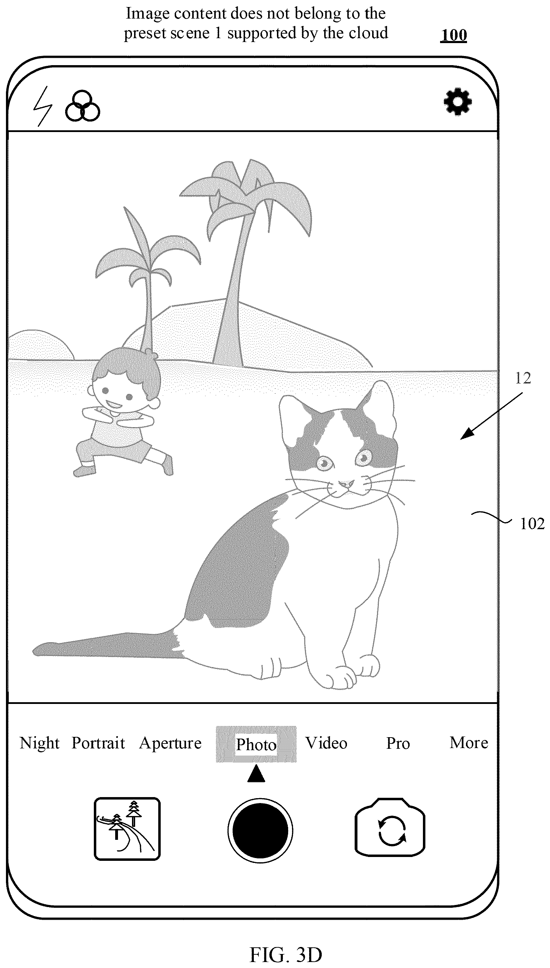

In an implementation, the detection algorithm plug-in first identifies a target subject in the original image 1, where the target subject is a photographed object that the user pays most attention to in all photographed objects in the image; and only when it is detected that the target subject in the original image 1 is the preset type of photographed object indicated by the preset scene 1, it is determined that the image content of the original image 1 belongs to the preset scene 1, and the original image 1 is within the image enhancement capability range of the cloud. A manner of identifying the target subject is not specifically limited in embodiments of this application. For example, the preset scene 1 indicates a portrait, but does not indicate a cat. The preview image shown in FIG. 3C includes a person and a cat. After it is detected that a target subject in the raw image corresponding to the preview image is a person, it is determined that the image content of the image belongs to the preset scene 1 supported by the cloud. As shown in FIG. 3D, after it is detected that a target subject is switched from a person to a cat, it is determined that image content of an image does not belong to the preset scene 1 supported by the cloud.

In an implementation, as shown in FIG. 3C, when the original image currently captured by the camera is within the image enhancement capability range of the cloud, the terminal device further displays the prompt information 1 (for example, prompt information 201), to prompt the user that the cloud supports performing enhancement processing on the currently captured image. As shown in FIG. 3D, when the original image currently captured by the camera is not within the image enhancement capability range of the cloud, the terminal device stops displaying the prompt information 201 and/or displays prompt information 2, to prompt the user that the cloud does not support performing enhancement processing on the currently captured image. The prompt information 1 and the prompt information 2 may be displayed in one or more forms such as a text, an image, an animation, a control, and a sound, which is described in detail in a subsequent embodiment. Details are not described herein.

In some embodiments, the preset scene 1 further indicates a motion status of the photographed object. For example, the motion status includes a dynamic state and a static state. The preset scene supported by the cloud includes a static portrait, but does not include a moving portrait. To be specific, the cloud supports performing enhancement processing on a static portrait in the image, but does not support performing enhancement processing on a dynamic portrait in the image.

In some embodiments, the preset scene 1 further indicates a quantity of photographed objects. For example, the preset scene supported by the cloud includes a multi-person group photo, but does not include a single-person photo. To be specific, the cloud supports performing enhancement processing on the multi-person group photo, but does not support performing enhancement processing on the single-person photo.

In some embodiments, the preset scene 1 further indicates a size of the photographed object. For example, the preset scene supported by the cloud includes a portrait whose size is greater than the area threshold. To be specific, the cloud supports performing enhancement processing on the portrait whose size is greater than the area threshold, but does not support performing enhancement processing on an excessively small portrait. The area threshold may be set based on an actual application requirement, and is not limited herein. For example, the area threshold is 5% of an area of the image.

In some embodiments, the preset scene 1 further indicates a blur level of the photographed object. For example, the preset scene supported by the cloud includes a portrait whose blur level is less than a blur level threshold. To be specific, the cloud supports performing enhancement processing on the portrait whose blur level is less than the blur level threshold, but does not support performing enhancement processing on an excessively blurry portrait. A blur level measurement method and the blur level threshold may be set based on an actual application requirement, and are not limited herein.

In some embodiments, the image enhancement capability supported by the cloud includes a capability of performing enhancement processing using one or more image processing modes supported by the cloud. If it is detected that an image processing modes used when the original image 1 is taken is the image processing mode supported by the cloud, the original image 1 is within the image enhancement capability range of the cloud.

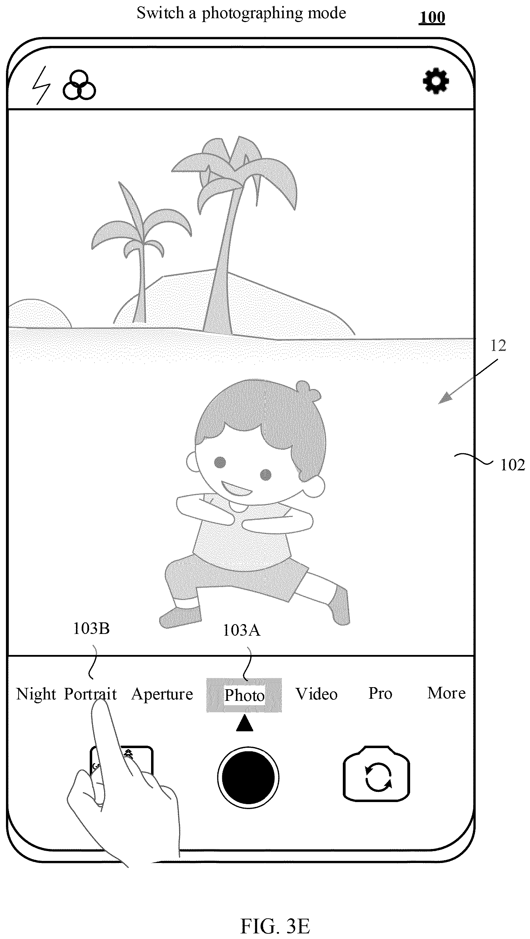

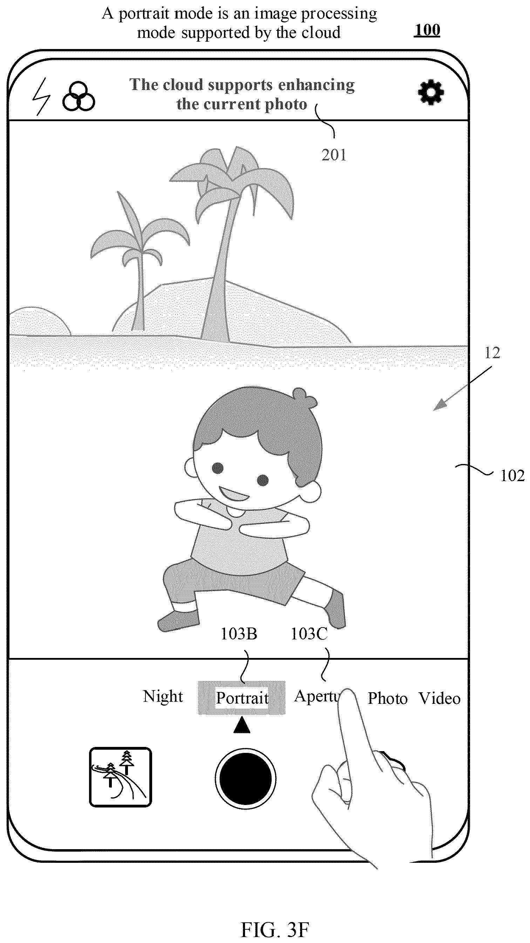

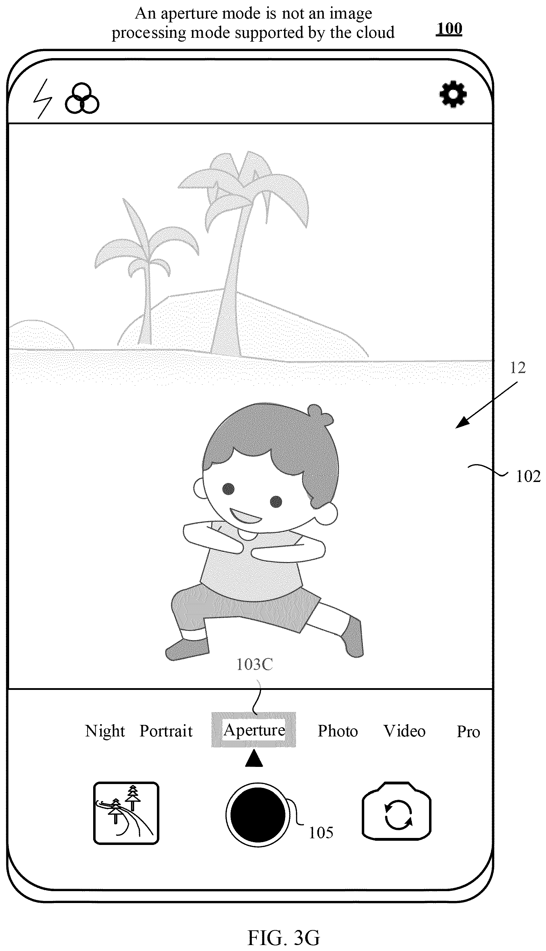

The photographing mode is used as an example. The cloud supports the portrait mode, but does not support the aperture mode. As shown in FIG. 3E and FIG. 3F, an input operation of tapping the portrait mode 103B by the user is detected, and the terminal device 100 switches the photographing mode to the portrait mode. When the detection algorithm plug-in detects that the portrait mode is the image processing mode supported by the cloud, the terminal device 100 displays the prompt information 201, to prompt the user that the cloud supports performing enhancement processing on a currently captured image. As shown in FIG. 3F and FIG. 3G, an input operation of tapping the aperture mode 103C by the user is detected, and the terminal device 100 switches the photographing mode to the aperture mode. The detection algorithm plug-in detects that the aperture mode is not the image processing mode supported by the cloud, display of the prompt information 201 is stopped, to prompt the user that the cloud does not support performing enhancement processing on a currently captured image.

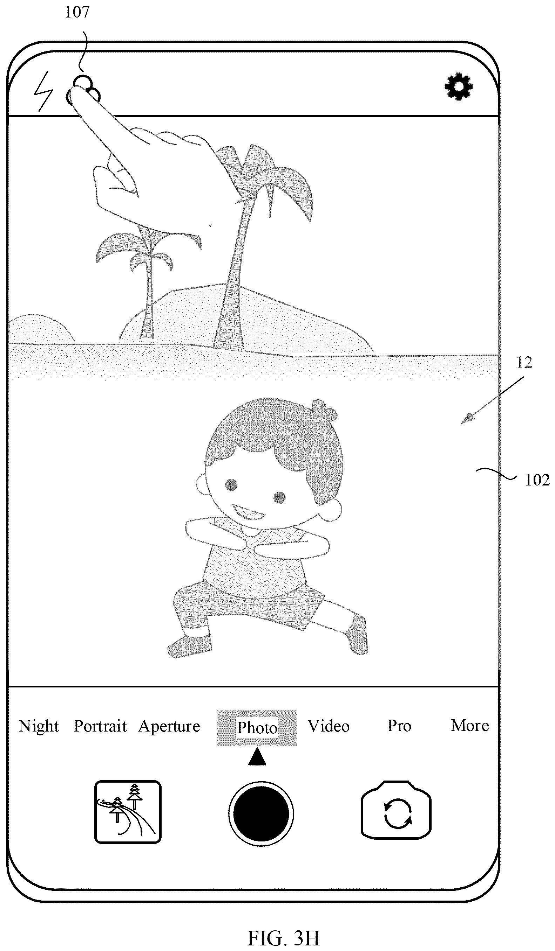

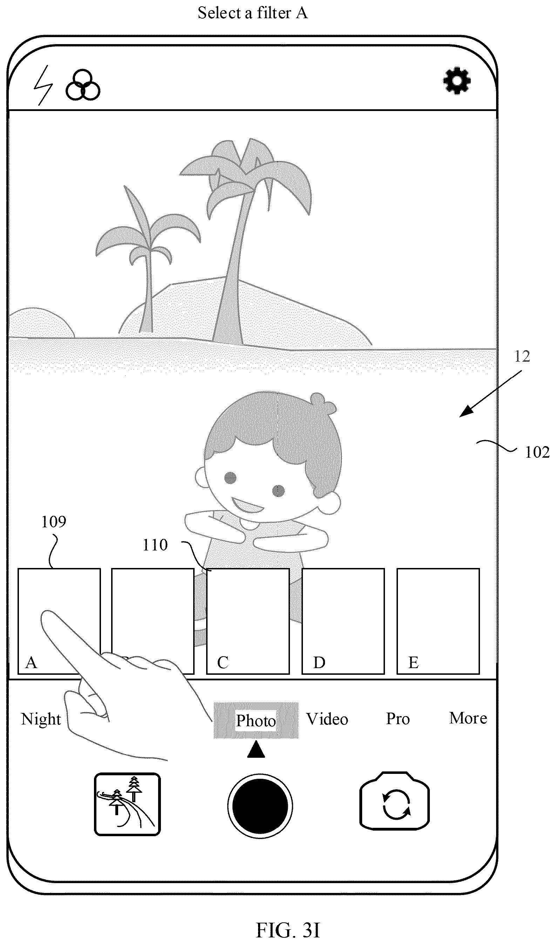

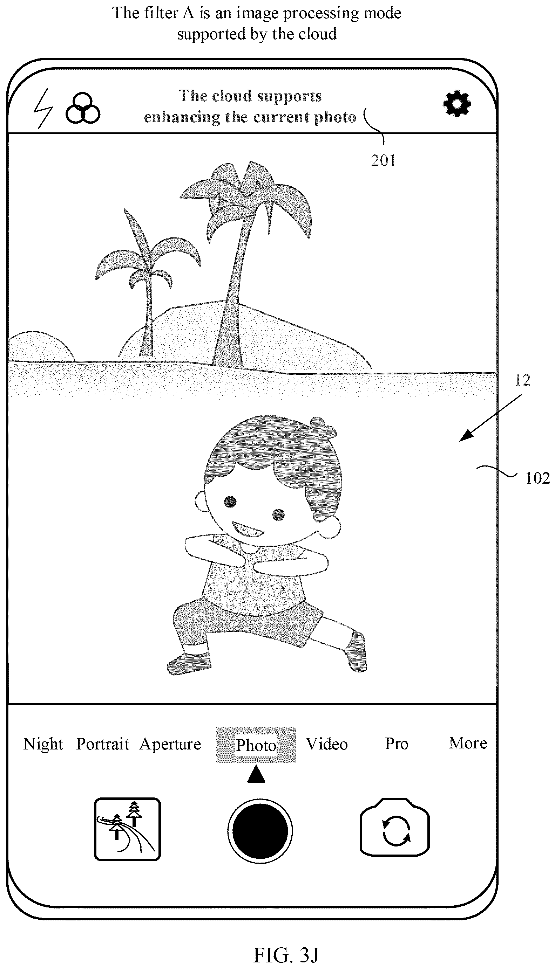

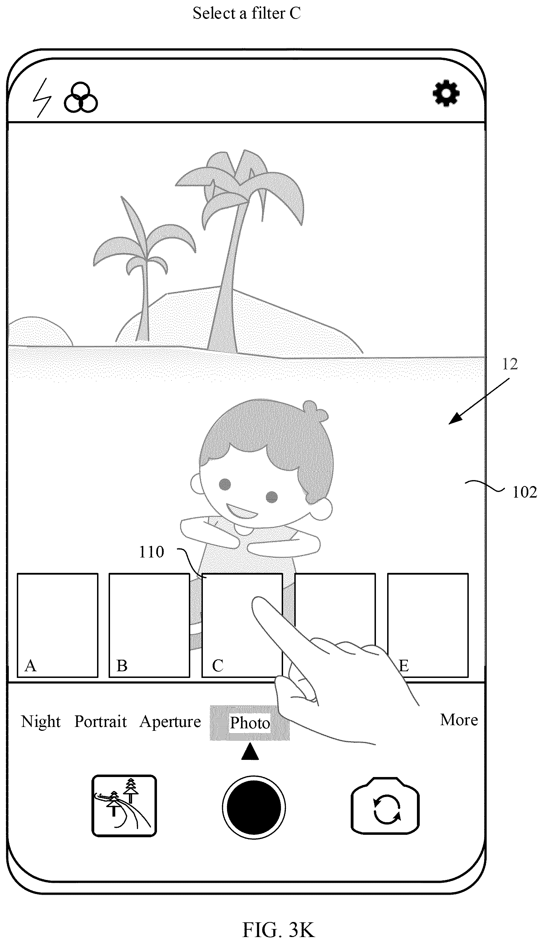

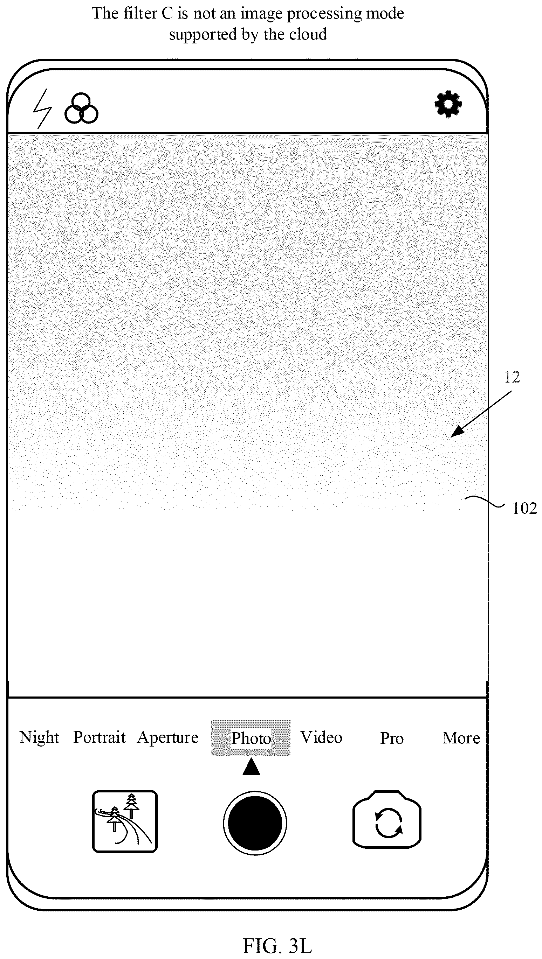

The filter is used as an example. The cloud supports some filter options provided by the terminal device 100, or the cloud supports all filter options provided by the terminal device 100, or the cloud does not support all the filter options provided by the terminal device 100. For example, as shown in FIG. 3H and FIG. 3I, the preview interface 12 further includes a filter control 107. After an input operation (for example, a tap operation) performed on the filter control 107 is detected, the camera APP displays a plurality of filter options, for example, a filter option 109 of a filter A and a filter option 110 of a filter C. A filter effect diagram and a filter name are displayed for a filter option. The cloud supports the filter A but does not support the filter C. As shown in FIG. 3I and FIG. 3J, after an input operation of selecting the filter A by the user (for example, tapping the filter option 109) is detected, the camera APP adds the filter A to an image captured by the camera. The detection algorithm plug-in detects that the filter A is the image processing mode supported by the cloud. The terminal device 100 displays the prompt information 201, to prompt the user that the cloud supports performing enhancement processing on the currently captured image. As shown in FIG. 3K and FIG. 3L, after an input operation of selecting the filter C by the user (for example, tapping the filter option 110) is detected, the camera APP adds the filter C to an image captured by the camera. The detection algorithm plug-in detects that the filter C is not the image processing mode supported by the cloud. The terminal device 100 does not display the prompt information 201, to prompt the user that the cloud does not support performing enhancement processing on the currently captured image.

In some embodiments, the image enhancement capability supported by the cloud includes a capability of performing enhancement processing on a preset scene supported by the cloud and a capability of performing enhancement processing in an image processing mode supported by the cloud. If it is detected that image content of the original image 1 belongs to the preset scene supported by the cloud, and an image processing mode used for the original image 1 is an image processing mode supported by the cloud, it is determined that the original image 1 is within the image enhancement capability range of the cloud.

In some embodiments, the cloud supports different preset scenes in different image processing modes. The detection algorithm plug-in indicates a correspondence between an image processing mode supported by the cloud and a preset scene. For example, the cloud supports the portrait mode, and a preset scene supported by the cloud in the portrait mode includes a "portrait" but does not include the another type of photographed object. The cloud supports a night mode, and a preset scene supported by the cloud in the night mode includes a "portrait" and further includes a "cat". If it is detected that an image processing mode 1 used for the original image 1 is the image processing mode supported by the cloud, and the image content in the original image 1 belongs to a preset scene corresponding to the image processing mode 1 supported by the cloud, it is determined that the original image 1 is within the image enhancement capability range of the cloud. The image processing mode 1 is any image processing mode used for the original image 1.

The image processing mode provided by the camera APP of the terminal device 100, a process in which the user selects the image processing mode, and an image processing algorithm/model corresponding to each image processing mode on the cloud/device are not specifically limited in embodiments of this application.

The following describes several interface embodiments related to the application scenario 1.

In an implementation, after the preview interface 12 is started, when it is detected that the original image currently captured by the camera is within the image enhancement capability range of the cloud, the prompt information 1 is displayed. In this case, if a cloud photographing operation of the user is detected, the photo 1 is taken, and the photo 1 is uploaded to the cloud for enhancement processing. If a local photographing operation of the user is detected, the photo 1 is taken, and enhancement processing is performed on the photo on the device. It may be understood that, when the currently captured original image is within the image enhancement capability range of the cloud, the terminal device 100 is provided with a cloud photographing operation and a local photographing operation for selection by the user. The local photographing operation may be a native photographing operation of the camera APP, for example, a tap operation, a language instruction, or a floating gesture operation performed on the photographing control 105. The foregoing implementation may be applied to an interface embodiment 1 to an interface embodiment 3.

In another implementation, after it is detected that the currently captured image is within the image enhancement capability range of the cloud, prompt information 1 is displayed. In this case, if a photographing operation of the user is detected, the photo 1 is taken, and the photo 1 is uploaded to the cloud for enhancement processing. It may be understood that, in this implementation, a cloud photographing operation and a local photographing operation are not distinguished, and this implementation may be applied to an interface embodiment 4.

### Interface embodiment 1

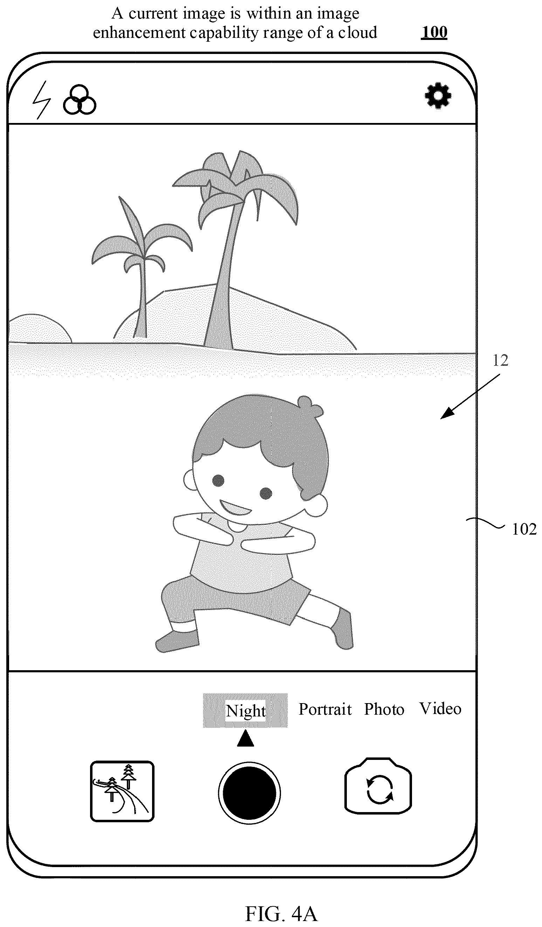

For example, as shown in FIG. 4A, a taken picture captured by the camera includes a portrait, and the photographing mode is the night mode. The portrait belongs to the preset scene supported by the cloud, and the night mode is the image processing mode supported by the cloud. The detection algorithm plug-in detects that an original image currently captured by the camera is within the image enhancement capability range of the cloud.

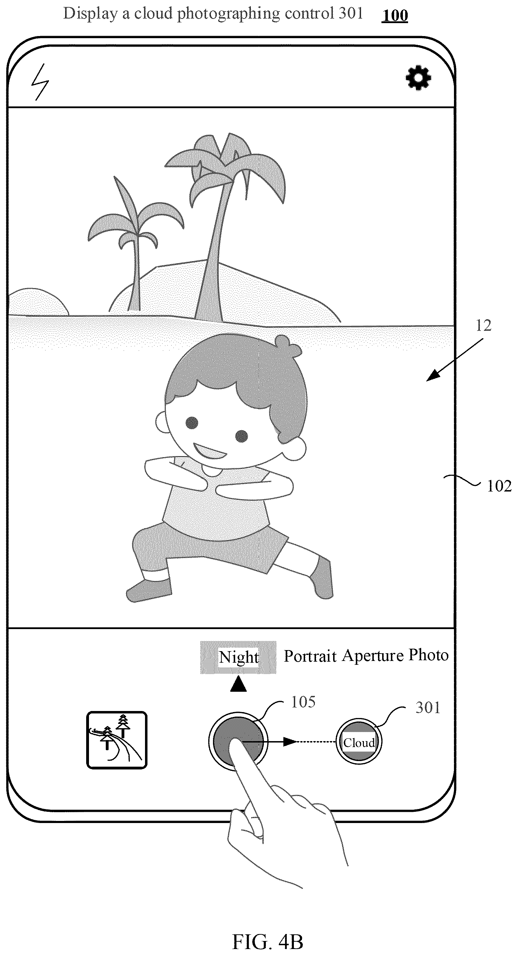

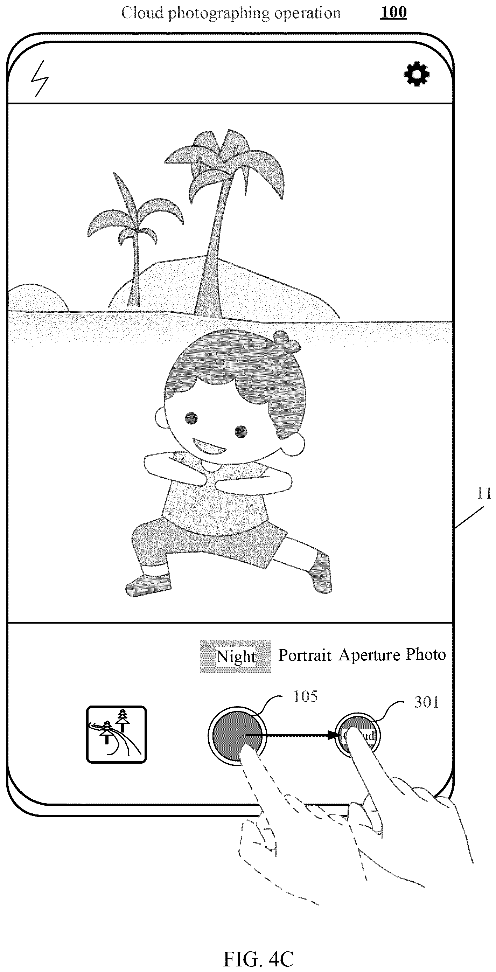

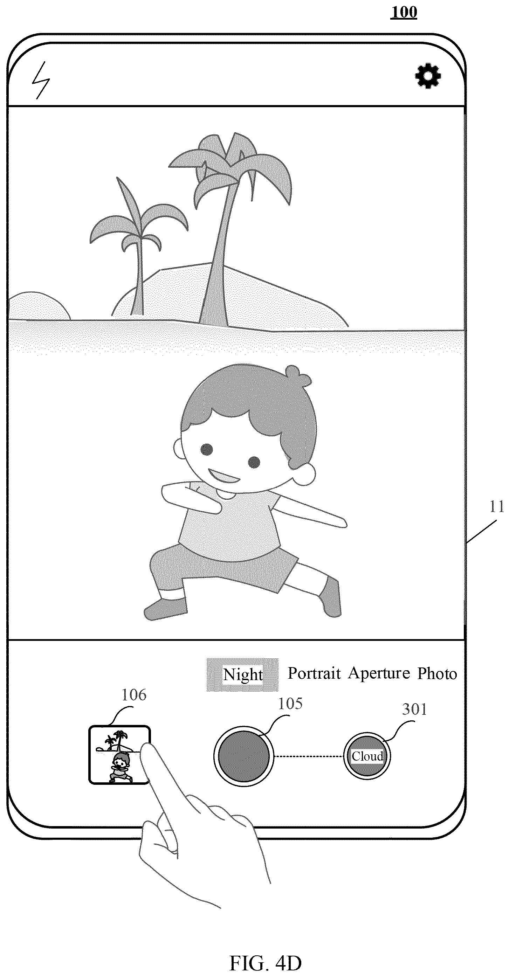

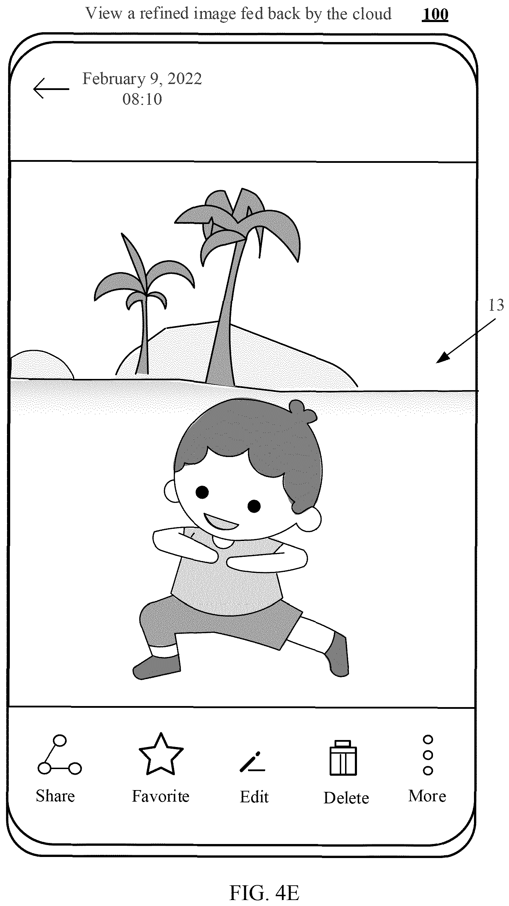

For example, with reference to FIG. 4A and FIG. 4B, after it is detected that the currently captured original image is within the image enhancement capability range of the cloud, the prompt information 1 is displayed. The prompt information 1 is displayed as a cloud photographing control 301. The cloud photographing control 301 is located at an original display location of the camera switching control 104. As shown in FIG. 4B and FIG. 4C, after a slide operation of the user from the photographing control 105 to the cloud photographing control 301 is detected, the camera APP takes the photo 1, and the photo 1 is uploaded to the cloud for enhancement processing. As shown in FIG. 4D, after a refined image that is of the photo 1 and that is obtained after enhancement processing by the cloud is obtained, a thumbnail of the refined image is displayed on the album control 106. As shown in FIG. 4D and FIG. 4E, after it is detected that the user taps the album control 106, the terminal device 100 displays an image display interface 13. The refined image of the photo 1 is displayed in the image display interface 13.

In the examples described in FIG. 4A to FIG. 4D, the cloud photographing operation may include the slide operation from the photographing control 105 to the cloud photographing control 301, and the local photographing operation may include the tap operation performed on the photographing control 105.

As shown in FIG. 4D, after the photo 1 is taken, if an original image currently captured by the camera is still within the image enhancement capability range of the cloud, the cloud photographing control 301 continues to be displayed. If the original image currently captured by the camera is not within the image enhancement capability range of the cloud, display of the cloud photographing control 301 is stopped.

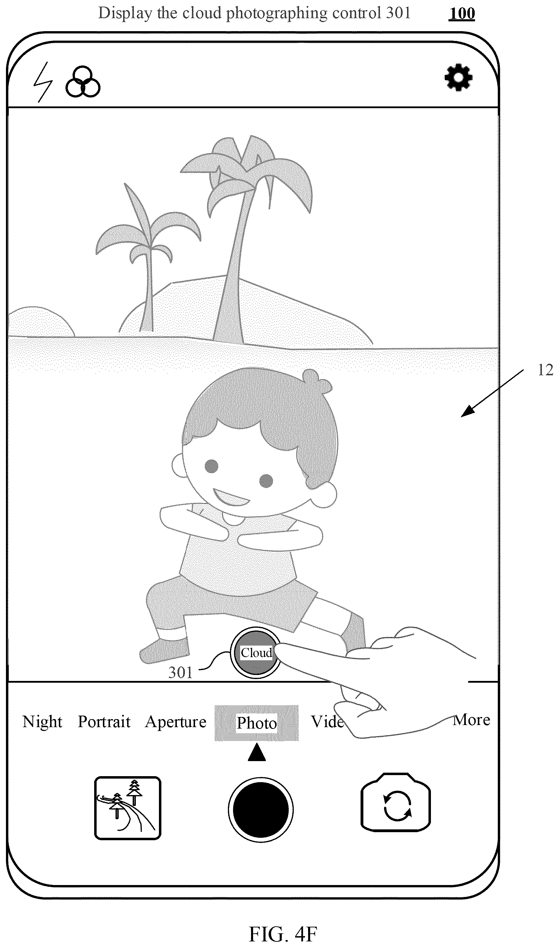

A display location of the cloud photographing control 301 in the preview interface 12 and the cloud photographing operation performed on the cloud photographing control 301 are not specifically limited in embodiments of this application. For example, with reference to FIG. 4F, the cloud photographing control 301 may be located above the photographing control 105, and the cloud photographing operation may include a tap operation performed on the cloud photographing control 301.

### Interface embodiment 2

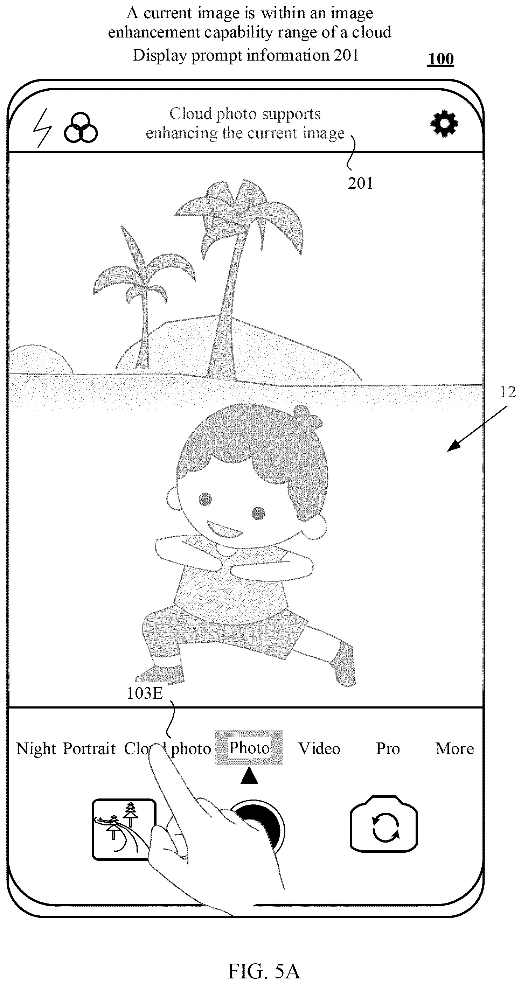

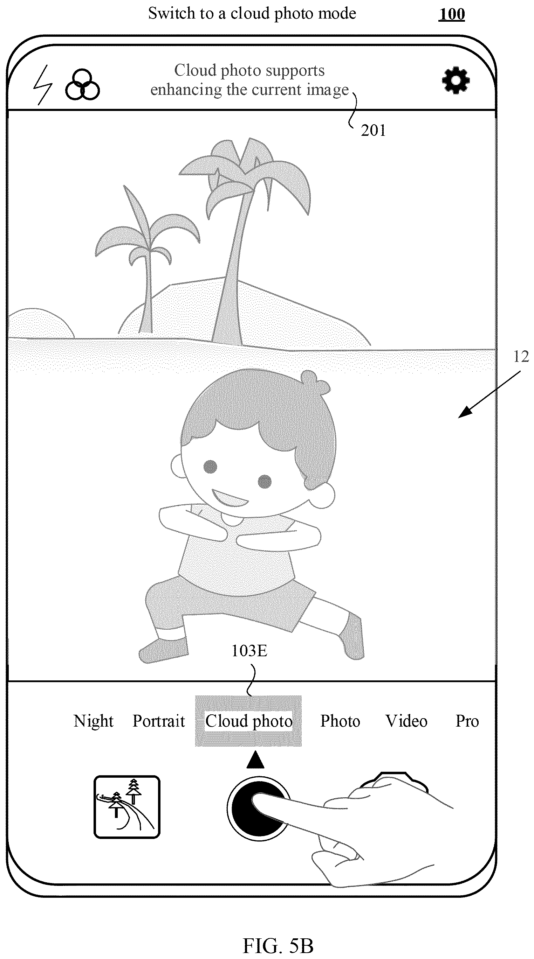

For example, with reference to FIG. 5A, the photographing mode bar 103 includes a cloud photo mode 103E. After it is detected that a currently captured original image is within the image enhancement capability range of the cloud, the prompt information 201 is displayed, to prompt the user that the cloud supports performing enhancement processing on the currently captured image. After seeing the prompt information 201, the user may switch the photographing mode to a cloud photo mode. As shown in FIG. 5A and FIG. 5B, after an input operation (for example, a tap operation) performed by the user on the cloud photo mode 103E is detected, the camera APP switches the photographing mode to the cloud photo mode. As shown in FIG. 5B, in the cloud photo mode, after a tap operation performed by the user on the photographing control 105 is detected, the camera APP takes the photo 1, the photo 1 is uploaded to the cloud for enhancement processing, and a refined image that is of the photo and that is fed back by the cloud is obtained.

In some embodiments, after the cloud photo mode is switched to through the cloud photo mode 103E, if it is detected that a currently captured original image is not within the image enhancement capability range of the cloud, the prompt information 2 is displayed, to prompt the user that the currently captured image is not within the image enhancement capability range of the cloud. Based on the prompt information 2, the user may switch the cloud photo mode 103E to another photographing mode.

In some embodiments, if it is detected that the currently captured image is within the image enhancement capability range of the cloud, the camera APP automatically switches the photographing mode to the cloud photo mode. In some embodiments, when the photographing mode is automatically switched to the cloud photo mode, the prompt information 201 does not need to be displayed. The user is prompted, by automatically switching to the cloud photo mode, that the currently captured image is within the image enhancement capability range of the cloud.

It may be understood that the cloud photographing operation includes a native photographing operation (for example, a tap operation performed on the photographing control 105) in the cloud photo mode; and the local photographing operation includes the native photographing operation in a non-cloud photo mode. For example, the user switches the photographing mode to the another photographing mode through the cloud photo mode 103E and then taps the photographing control 105. The user can autonomously choose to take a photo in the cloud photo mode or the non-cloud photo mode.

### Interface embodiment 3

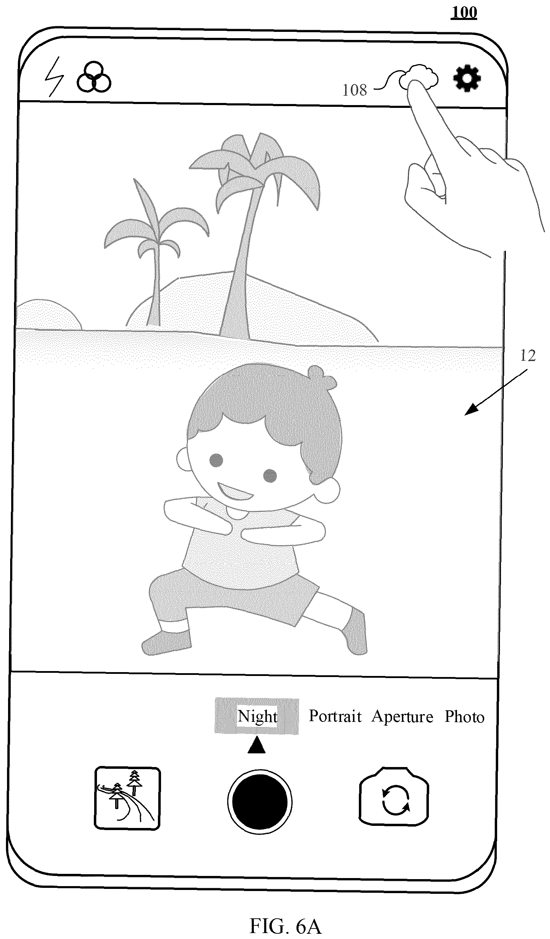

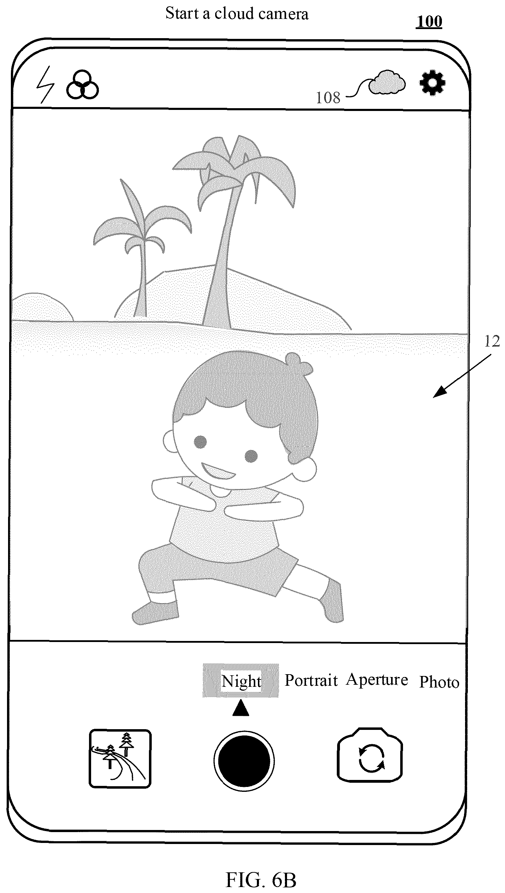

For example, with reference to FIG. 6A, an on/off control 108 of a cloud camera is provided in the preview interface 12. The on/off control 108 has two states: an on state and an off state. The user may control the on/off control 108 to switch between the two states. As shown in FIG. 6A and FIG. 6B, after an input operation (for example, a tap operation) performed by the user on the on/off control 108 is detected, the terminal device 100 switches the on/off control 108 from the off state to the on state, that is, the cloud camera is started. In addition to the preview interface 12, the on/off control 108 of the cloud camera may alternatively be provided on another interface (for example, a setting interface) of the camera APP. This is not specifically limited herein.

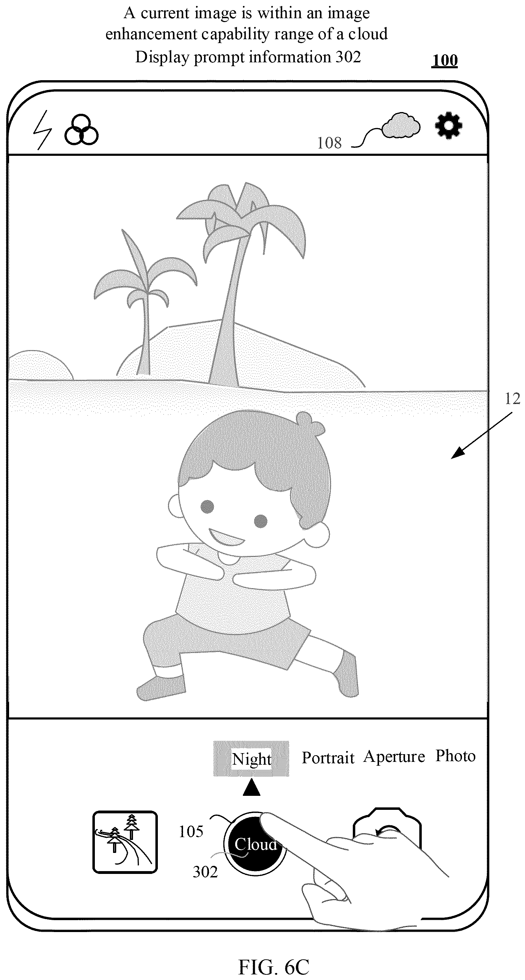

After the cloud camera is started, the terminal device 100 invokes the detection algorithm plug-in to detect whether an original image captured by the camera is within the image enhancement capability range of the cloud. As shown in FIG. 6C, when it is detected that a currently captured original image is within the image enhancement capability range of the cloud, prompt information 302 is displayed in the preview interface 12, to prompt the user that the cloud supports performing enhancement processing on the currently captured image. The prompt information 302 is superimposed and displayed on the photographing control 105 with a text "Cloud". As shown in FIG. 6C, when the "Cloud" is displayed on the photographing control 105, a native photographing operation, for example, a tap operation performed on the photographing control 105, of the user is detected. In response to the photographing operation, the camera APP takes the photo 1, the photo 1 is uploaded to the cloud for enhancement processing, and a refined image that is of the photo 1 and that is fed back by the cloud is obtained.

It may be understood that the cloud photographing operation includes the native photographing operation (for example, the tap operation performed on the photographing control 105) when the prompt information 302 is displayed after the cloud camera is started. The local photographing operation includes a native photographing operation after the cloud camera is stopped. For example, the user stops the cloud camera through the cloud camera control 108 and then taps the photographing control 105. The user can autonomously choose to start the cloud camera or stop the cloud camera.

### Interface embodiment 4

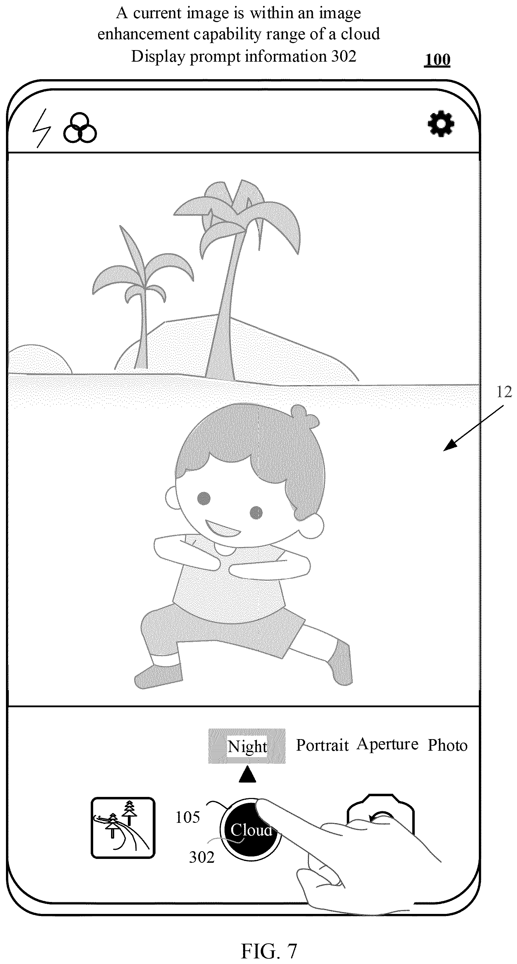

For example, with reference to FIG. 7, compared with that in the interface embodiment 3, the on/off control 108 of the cloud camera does not need to be set. After the preview interface 12 is started, the terminal device 100 automatically invokes the detection algorithm plug-in to detect whether an original image currently captured by the camera is within the image enhancement capability range of the cloud. As shown in FIG. 7, when it is detected that the currently captured original image is within the image enhancement capability range of the cloud, prompt information 302 is displayed in the preview interface 12, that is, the "Cloud" is superimposed and displayed on the photographing control 105, to prompt the user that the cloud supports performing enhancement processing on the currently captured image. In this case, if a photographing operation, for example, a tap operation performed on the photographing control 105, of the user is detected, the camera APP takes the photo 1, the photo 1 is uploaded to the cloud for enhancement processing, and a refined image that is of the photo and that is fed back by the cloud is obtained.

Display forms and display locations of the prompt information 1 (for example, the prompt information 201 and the prompt information 302) in the interface embodiments 2 to 4 are not specifically limited in embodiments of this application. It may be understood that, in the interface embodiments 1 to 4, when it is detected that the currently captured original image is not within the image enhancement capability range of the cloud, the terminal device 100 stops displaying the prompt information 1 (for example, the cloud photographing control 301, the prompt information 201, or the prompt information 302). In this case, if the photographing operation of the user is detected, for example, the tap operation performed on the photographing control 105, the camera APP takes the photo 1 and locally performs enhancement processing on the photo 1.

In some embodiments, after the terminal device 100 starts the preview interface 12, regardless of whether an original image currently captured by the camera is within the image enhancement capability range of the cloud, the terminal device 100 performs enhancement processing on the image on the device in an image processing mode (for example, the photographing mode or the filter) indicated by a retouching parameter used for the current image, and displays, in the preview box 102, a refined image, namely, a preview image, obtained after enhancement processing by the device.

In some embodiments, after the terminal device 100 starts the preview interface 12, when the original image 1 currently captured by the camera is within the image enhancement capability range of the cloud, the terminal device 100 uploads the original image 1 and an image retouching parameter used for the original image 1 to the cloud. The cloud performs enhancement processing on the original image 1 based on the image retouching parameter, and displays, in the preview box 102, a refined image, namely, a preview image, obtained after enhancement processing by the cloud.

In an implementation, because computing power and a load capability of a CPU of the terminal device 100 are limited, compared with the cloud, for a same image processing mode, the device uses an image processing algorithm/model with lower algorithm complexity and a smaller required load. When enhancement processing is performed on an image in the same image processing mode (for example, the foregoing initial image processing, photographing mode, or filter), image quality of a refined image obtained after enhancement processing by the cloud is higher than that of a refined image obtained after enhancement processing by the device, and can reach an image quality level that cannot be achieved by the device, to obtain a photo with a better display effect. For example, for a same taken picture, a preview image that is in the night mode and that is obtained after enhancement processing by the device is displayed in the preview box 102 in FIG. 4A to FIG. 4C. A photo that is in the night mode and that is obtained after enhancement processing by the cloud is displayed in the image display interface 13 in FIG. 4E. As shown in the figure, image quality of the photo obtained after enhancement processing by the cloud is higher than that of the preview image obtained after enhancement processing by the device.

With reference to the foregoing embodiments, the following describes in detail a method procedure of a device-cloud collaborative image enhancement method related to the application scenario 1. Through implementation of the device-cloud collaborative image enhancement method provided in embodiments of this application, only an image that is within the capability range of the cloud and that is taken by the camera is uploaded to the cloud for enhancement processing. While reducing a computing power requirement on and a load of the CPU of the device, this effectively improves device-cloud collaborative image enhancement efficiency, implements expectable and real-time enhancement processing by the cloud, and obtains a higher-quality photo.

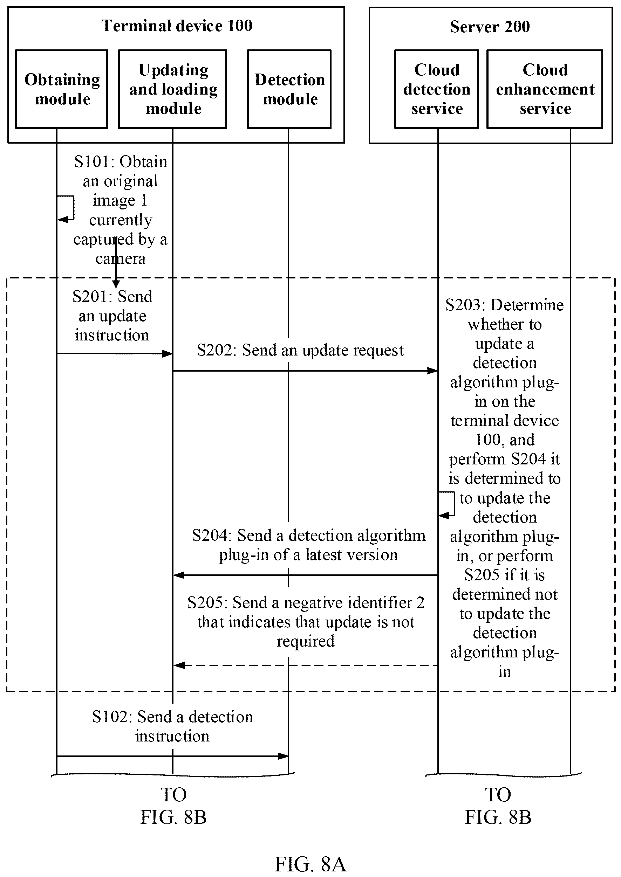

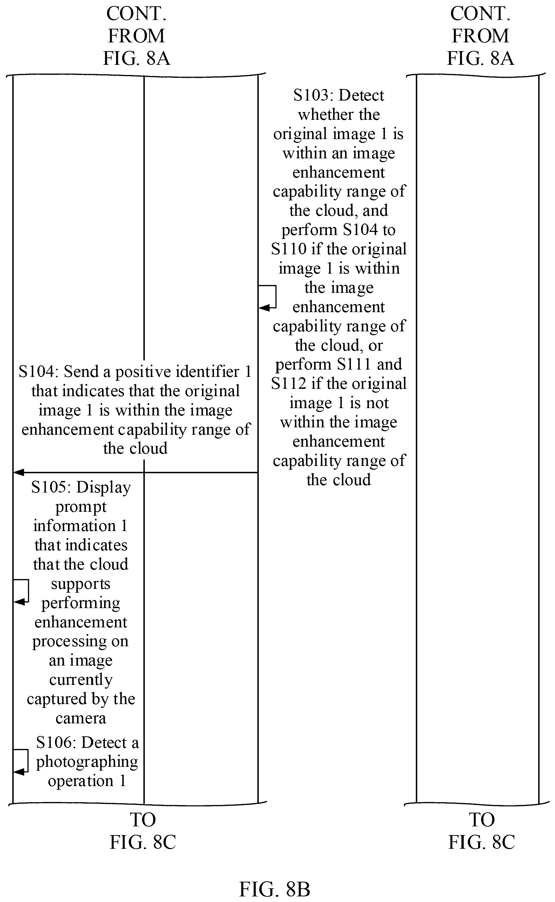

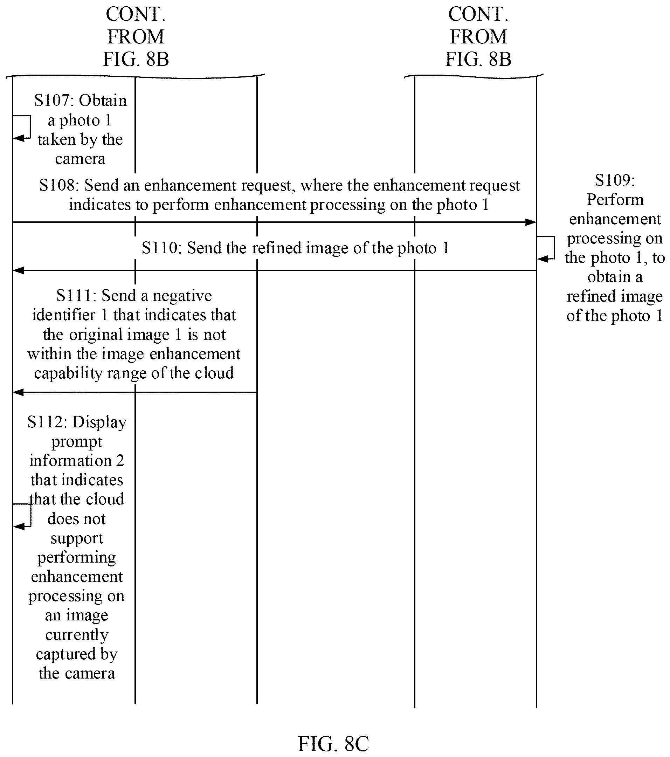

For example, as shown in FIG. 8A to FIG. 8C, a method procedure of a device-cloud collaborative image enhancement method may include some or all of steps S101 to S112.

S101: The obtaining module of the terminal device 100 obtains the original image 1 currently captured by the camera.

For example, with reference to FIG. 4A to FIG. 4F, after a user starts the camera APP, the terminal device 100 invokes the camera to capture the original image 1. A preview image corresponding to the original image 1 is displayed in the preview box 102 in the preview interface 12 of the camera APP. The user views a current taken picture through the preview image in the preview box 102.

The original image 1 may be a raw image captured by the camera, or may be a jpg/jpeg image obtained after initial image processing is performed on the raw image. The preview image displayed in the preview box 102 may be the jpg/jpeg image, or may be a refined image obtained after enhancement processing is performed on the jpg/jpeg image in an image processing mode (for example, a photographing mode or a filter) currently used by the camera for photographing.

For example, as shown in FIG. 3E to FIG. 3G, the camera APP may take an image in a portrait mode. A preview image is an image obtained after enhancement processing is performed using an image processing algorithm corresponding to the portrait mode. For example, as shown in FIG. 3I to FIG. 3L, the camera APP may add a filter (for example, the filter A) to a currently taken image. A preview image is an image obtained after enhancement processing is performed using an image processing algorithm corresponding to the filter A.

S102: The obtaining module of the terminal device 100 sends a detection instruction to the detection module.

S103: In response to the detection instruction, the detection module of the terminal device 100 detects whether the original image 1 is within an image enhancement capability range of the cloud, and performs S104 to S110 if the original image 1 is within the image enhancement capability range of the cloud, or performs S111 and S112 if the original image 1 is not within the image enhancement capability range of the cloud.

In some embodiments, after the preview interface 12 of the camera APP is started, the obtaining module of the terminal device 100 sends the detection instruction to the detection module. In some embodiments, the obtaining module of the terminal device 100 sends the detection instruction to the detection module after the preview interface 12 of the camera APP is started and the cloud camera is started.

In some embodiments, the detection module of the camera APP identifies and detects the currently taken original image 1 using the detection algorithm plug-in, to determine whether image content of the original image 1 belongs to a preset scene supported by the cloud and/or whether an image processing mode used for the original image 1 is an image processing mode supported by the cloud. In an implementation, when the image content of the original image 1 belongs to the preset scene supported by the cloud, it is determined that the original image 1 is within the image enhancement capability range of the cloud. In an implementation, when the image processing mode used for the original image 1 is the image processing mode supported by the cloud, it is determined that the original image 1 is within the image enhancement capability range of the cloud. In an implementation, when the image content of the original image 1 belongs to the preset scene supported by the cloud, and the image processing mode used for the original image 1 is the image processing mode supported by the cloud, it is determined that the original image 1 is within the image enhancement capability range of the cloud. For details, refer to related descriptions in the foregoing embodiments. Details are not described herein again.

S104: The detection module of the terminal device 100 sends a positive identifier 1 to the obtaining module, where the positive identifier 1 indicates that the original image 1 is within the image enhancement capability range of the cloud.

S105: The obtaining module of the terminal device 100 displays the prompt information 1 based on the positive identifier 1, where the prompt information 1 indicates that the cloud supports performing enhancement processing on an image currently captured by the camera.

In an implementation, the terminal device 100 further includes a display module. The obtaining module of the terminal device 100 indicates, based on the positive identifier 1, the display module to display the prompt information 1.

For example, with reference to related descriptions in FIG. 4A to FIG. 7, when it is detected that the cloud supports performing enhancement processing on an original image currently captured by the camera. The camera APP displays the prompt information 1 (for example, the cloud photographing control 301, the prompt information 201, and the prompt information 302) in the preview interface 12, to prompt the user in time that the cloud supports performing enhancement processing on the image currently captured by the camera. In this way, the user perceives that the cloud can perform enhancement processing on the current taken picture, and has a psychological expectation on a photographing effect obtained after enhancement processing by the cloud.

Herein, step S105 is optional. In some embodiments, the prompt information 1 does not need to be displayed.

S106: The obtaining module of the terminal device 100 detects the photographing operation 1.

S107: In response to the photographing operation 1, the obtaining module of the terminal device 100 obtains the photo 1 taken by the camera.

S108: The obtaining module of the terminal device 100 sends an enhancement request to the server 200, where the enhancement request includes the photo 1, and the enhancement request indicates to perform enhancement processing on the photo 1.

For example, with reference to related descriptions in the interface embodiment 1, the prompt information 1 is displayed as the cloud photographing control 301 displayed in the preview interface 12. The photographing operation 1 includes an input operation performed on the cloud photographing control 301. For example, with reference to related descriptions in FIG. 4A to FIG. 4C, the photographing operation 1 includes the slide operation from the photographing control 105 to the cloud photographing control 301. For example, with reference to related descriptions in FIG. 4F, the photographing operation 1 includes the tap operation performed on the cloud photographing control 301.

For example, with reference to related descriptions in the interface embodiment 2, the prompt information 1 is displayed as the prompt information 201 displayed in the preview interface 12. The photographing operation 1 includes the native photographing operation in the cloud photo mode, for example, the tap operation performed on the photographing control 105.

For example, with reference to related descriptions in the interface embodiment 3, the prompt information 1 is displayed as the prompt information 302 displayed on the photographing control 105. The photographing operation 1 includes the native photographing operation, for example, the tap operation performed on the photographing control 105, performed when the cloud camera is started and the prompt information 302 is displayed.

For example, with reference to related descriptions in the interface embodiment 4, the prompt information 1 is displayed as the prompt information 302 displayed on the photographing control 105. The photographing operation 1 includes a native photographing operation on the camera APP.

In some embodiments, after the photo 1 taken by the camera is obtained in step S107, if the obtaining module determines that an original image (for example, the original image 1) that is before the photo 1 and that is recently captured by the camera is within the image enhancement capability range of the cloud, the terminal device 100 performs S108, to be specific, requests the server 200 to perform enhancement processing on the photo 1, or performs enhancement processing on the photo 1 on the device if the original image is not within the image enhancement capability range of the cloud.

In some embodiments, after the photo 1 taken by the camera is obtained in step S107, and before step S108, the method procedure further includes: The obtaining module sends a detection instruction to the detection module, where the detection instruction indicates to detect whether the photo 1 is within the image enhancement capability range of the cloud; and the detection module sends a positive identifier 2 to the obtaining module when detecting that the photo 1 is within the image enhancement capability range of the cloud, where the positive identifier 2 indicates that the photo 1 is within the image enhancement capability range of the cloud. In step S108, the obtaining module sends the enhancement request to the server 200 only after the obtaining module receives the positive identifier 2, to request the server 200 to perform enhancement processing on the photo 1.

In this embodiment of this application, when a photo is taken, a taken image is automatically detected and identified, and only an image within the capability range of the cloud is uploaded to the cloud in real time for enhancement processing. In this way, it is ensured enhancement processing by the cloud is effective each time, to avoid a waste of traffic and poor user experience that are caused by ineffective uploading.

S109: The cloud enhancement service of the server 200 performs enhancement processing on the photo 1, to obtain a refined image of the photo 1.

In some embodiments, the enhancement request further includes an image retouching parameter. The image retouching parameter indicates one or more image processing modes used for the photo 1. The server 200 performs image processing on the photo 1 using an image processing algorithm/model corresponding to the one or more image processing modes, to obtain the refined image of the photo 1.

It should be noted that the photo 1 uploaded to the cloud is an original image, namely, a raw image, captured in response to the photographing operation 1 of the user, or a jpg/jpeg image. In an implementation, the photo 1 is the raw image. The server performs initial image processing on the photo 1, to obtain a jpg/jpeg image corresponding to the photo 1, and then performs image processing on the jpg/jpeg image using the image processing algorithm/model corresponding to the one or more image processing modes, to obtain the refined image of the photo 1. Computing power of the server 200 is far greater than that of the terminal device 100. Compared with the terminal device 100, the server 200 can obtain the jpg/jpeg image with higher image quality by performing initial image processing on the raw image. In an implementation, the image retouching parameter corresponding to the photo 1 further indicates an initial image processing mode.

In some embodiments, the photo 1 sent to the cloud is the raw image. The server 200 performs initial image processing on the raw image. The server sends, to the terminal device 100, a jpg/jpeg image obtained after initial processing, namely, a refined image of the raw image. For example, if the photo 1 is taken in a photographing mode (for example, a photo mode or a cloud photo mode) other than the foregoing preset photographing mode (for example, a portrait mode or a night mode), and another additional image processing mode (for example, a filter or beauty) is not selected, the server 200 needs only to perform initial image processing on the photo 1 (namely, the raw image), and feed back the processed jpg/jpeg image to the terminal device 100.

It may be understood that, if the photo 1 uploaded by the device is the jpg/jpeg image, the server 200 does not need to perform the foregoing initial image processing. For the foregoing initial image processing, refer to related descriptions in the foregoing embodiments. Details are not described herein again.

S110: The server 200 sends the refined image of the photo 1 to the terminal device 100.

After obtaining the refined image that is of the photo 1 and that is fed back by the server 200, the terminal device 100 may further display the refined image of the photo 1 for viewing by the user. For example, with reference to related descriptions in FIG. 4A to FIG. 4E, after the photo 1 is taken, an input operation of tapping the album control 106 by the user is detected, and the terminal device 100 displays the refined image of the photo 1 in the image display interface 13.

In this embodiment of this application, when the photo is taken, a decision is automatically made on whether to upload the photo to the cloud for enhancement processing. After being taken, the photo can be uploaded in a background without excessive operations of the user. This has a smooth process, and can avoid a complex operation caused when enhancement processing by the cloud is performed on the taken photo later.

S111: The detection module of the terminal device 100 sends a negative identifier 1 to the obtaining module, where the negative identifier 1 indicates that the original image 1 is not within the image enhancement capability range of the cloud.

S112: The obtaining module of the terminal device 100 displays prompt information 2 based on the negative identifier 1, where the prompt information 2 indicates that the cloud does not support performing enhancement processing on an image currently captured by the camera.

In this embodiment of this application, the terminal device 100 further includes a local enhancement service. Based on the negative identifier 1, the obtaining module may indicate the local enhancement service to perform enhancement processing on the image 2.

In an implementation, the terminal device 100 further includes a display module. The obtaining module of the terminal device 100 indicates, based on the negative identifier 1, the display module to display the prompt information 2. Herein, step S112 is optional. In some embodiments, the prompt information 2 does not need to be displayed.

In this embodiment of this application, if the cloud does not support performing enhancement processing on an original image currently captured by the camera, the prompt information 2 enables the user to perceive the fact. In this way, the user has a psychological expectation on a photographing effect obtained after enhancement processing by a non-cloud, and can make a decision on a processing method in advance. For example, based on the prompt information 2, the user determines not to take a photo, adjusts the taken picture, or adjusts an image processing mode currently used for photographing.

In this embodiment of this application, when the original image currently captured by the camera is not within the image enhancement capability range of the cloud, the user can obtain, through a native photographing operation on the camera APP, a refined image obtained after local enhancement processing. When the original image currently captured by the camera is within the image enhancement capability range of the cloud, the user can obtain, through the photographing operation 1, the refined image obtained after enhancement processing by the cloud. In this way, after the cloud performs enhancement processing on and delivers the photo taken by the device, photo quality can be greatly improved.

In the application scenario 1, the detection algorithm plug-in deployed on the cloud may be updated with the image enhancement capability supported by the cloud. The terminal device 100 may download the updated detection algorithm plug-in through the network.

In some embodiments, after downloading the detection algorithm plug-in from the server 200, the camera APP of the terminal device 100 may periodically request the server to update the detection algorithm plug-in, or each time the camera APP/preview interface 12 of the camera APP is started, request the server to update the detection algorithm plug-in, or each time a photographing operation of the user is detected, request the server to update the detection algorithm plug-in. A moment for triggering update of the detection algorithm plug-in is not specifically limited in embodiments of this application.

In some embodiments, after the camera APP of the terminal device 100 downloads the detection algorithm plug-in from the server 200, and the detection algorithm plug-in deployed on the cloud is updated, the server 200 automatically delivers the updated detection algorithm plug-in to the camera APP of the terminal device 100, and indicates the terminal device 100 to update the detection algorithm plug-in.

For example, FIG. 8A to FIG. 8C show a procedure of updating the detection algorithm plug-in. The procedure includes steps S201 to S205.

S201: The obtaining module of the terminal device 100 sends an update instruction to the updating and loading module, where the update instruction indicates to update the detection algorithm plug-in.

For example, as shown in FIG. 8A to FIG. 8C, after the camera APP is started, the obtaining module obtains an original image captured by the camera, and sends the update instruction to the updating and loading module.

S202: The updating and loading module of the terminal device 100 sends an update request to the server 200 based on the update instruction, where the update request indicates to update the detection algorithm plug-in.

S203: The cloud detection service of the server 200 determines, based on the update request, whether to update the detection algorithm plug-in on the terminal device 100, and performs S204 if it is determined to update the detection algorithm plug-in, or performs S205 if it is determined not to update the detection algorithm plug-in.

S204: The cloud detection service of the server 200 sends a detection algorithm plug-in of a latest version to the updating and loading module of the terminal device 100.

In some embodiments, after obtaining a detection algorithm plug-in of a new version delivered by the server 200, the updating and loading module of the terminal device 100 indicates the detection module to install the detection algorithm plug-in of the new version. An installation process is silently performed in a background, without affecting running and use of a foreground application.

S205: The cloud detection service of the server 200 sends a negative identifier 2 to the updating and loading module of the terminal device 100, where the negative identifier 2 indicates that the device does not need to update the detection algorithm plug-in.

Herein, step S205 is optional. In some embodiments, S205 does not need to be performed. When an identifier 3 is not received, the terminal device 100 does not need to update the detection algorithm plug-in.

In some embodiments, the update request includes a version number of a detection algorithm plug-in currently used by the camera APP. The cloud detection service compares the version number with a version number of a detection algorithm plug-in currently deployed on the cloud. If the two version numbers are inconsistent, it indicates that the detection algorithm plug-in on the cloud changes, and the server 200 performs S204, to be specific, delivers the detection algorithm plug-in of the latest version to the updating and loading module of the terminal device 100. If the two version numbers are consistent, it indicates that the device has used the detection algorithm plug-in of the latest version, and the device is notified that the detection algorithm plug-in does not need to be updated.

In this embodiment of this application, the detection algorithm plug-in deployed by the cloud detection service matches an image enhancement capability supported by the cloud enhancement service, and is independently developed based on the image enhancement capability. For example, in an image enhancement capability of an earlier version on the cloud, a preset scene supported by the cloud includes a "portrait", but does not include a "dog". Correspondingly, a detection algorithm plug-in of a 1.0 version matching the earlier version supports performing portrait detection on a to-be-processed image, but does not support performing "dog" detection on the to-be-processed image. In an image enhancement capability of the new version on the cloud, the cloud supports a newly added preset scene 2. The preset scene 2 includes the "dog". The cloud detection service updates the detection algorithm plug-in of the 1.0 version to a 1.1 version based on the preset scene 2. The 1.1 version obtained after update supports performing "dog" detection on the to-be-processed image, and determines, based on a detected "dog", that image content of the to-be-processed image belongs to the preset scene 2 supported by the cloud.

For example, in an image enhancement capability of an earlier version on the cloud, the preset scene 1 supported by the cloud includes a "portrait". Correspondingly, a detection algorithm plug-in of a 1.0 version matching the earlier version supports performing portrait detection on a to-be-processed image. In an image enhancement capability of the new version on the cloud, the preset scene 1 that is on the cloud and that is obtained after update includes "a portrait whose size is greater than an area threshold and whose blur level is less than a blur level threshold", that is, the preset scene 1 supported by the cloud is refined. The cloud detection service updates the detection algorithm plug-in of the 1.0 version to a 1.1 version based on the preset scene 1 obtained after update. The 1.1 version obtained after update can filter out an image with an excessively small portrait and an image with an excessively blurred portrait. This avoids a poor enhancement processing effect caused after such an image that does not belong to the preset scene supported by the cloud is uploaded to the cloud.

In this embodiment of this application, the detection algorithm plug-in can be independently deployed on the server 200. When an application version of the camera APP does not need to be updated, the terminal device 100 can independently upgrade the detection algorithm plug-in at a specific moment (for example, when the camera APP is started), and dynamically load and use the detection algorithm plug-in. This greatly reduces releasing of a version and maintenance costs of a detection algorithm plug-in.

The application scenario 2 is an image editing scenario, where the to-be-processed image is a to-be-edited local image.

In some embodiments, when viewing a local image using the APP 1 on the terminal device 100, the user may edit the image. When an editing operation 1 performed by the user on the image is detected, whether the image is within the image enhancement capability range of the cloud may be detected. The image may be uploaded to the cloud for enhancement processing if the image is within the image enhancement capability range. Enhancement processing may be performed on the image on the device if the image is not within the image enhancement capability range.

The APP 1 may be a system gallery APP on the terminal device 100, or may be another system application or a third-party application that has an image editing function, for example, an image beautification APP that has the image editing function. This is not specifically limited herein.

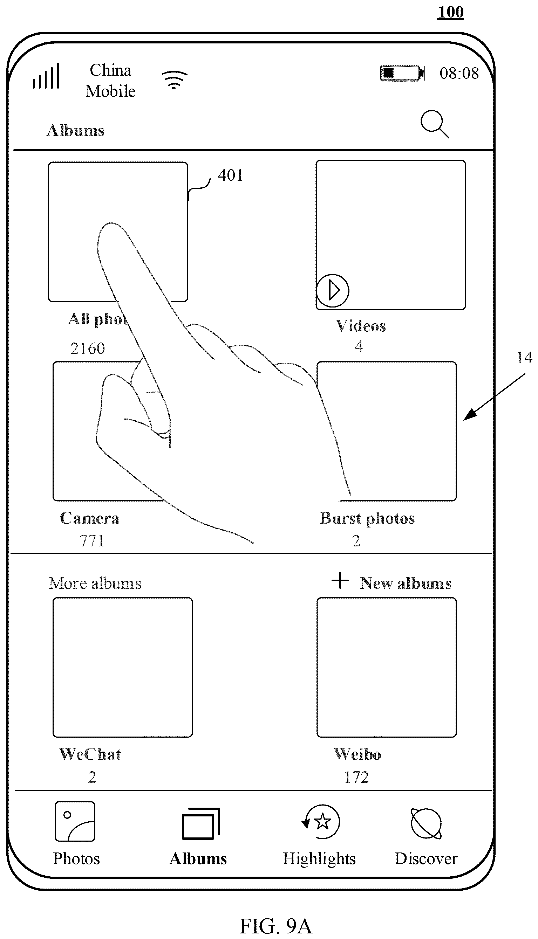

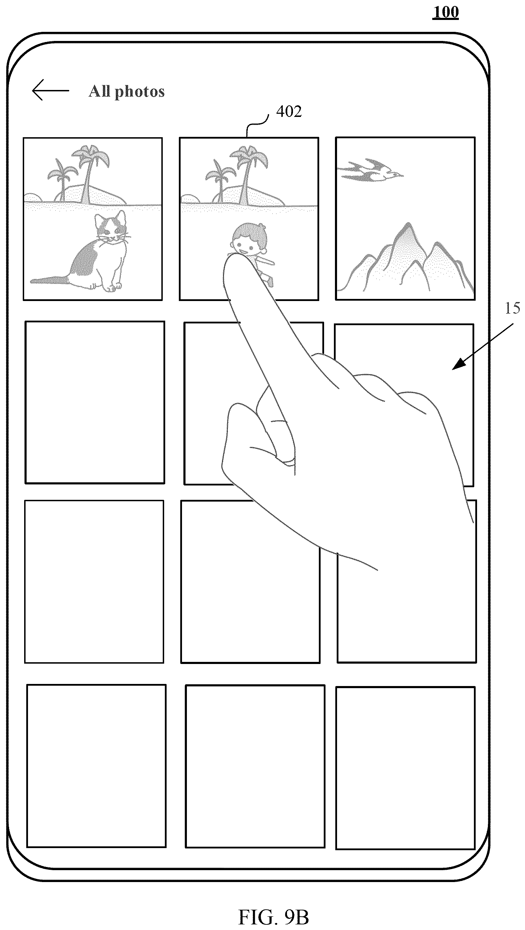

For example, the APP 1 is a camera application. FIG. 9A to FIG. 9F show users interface for editing a local image by a gallery APP. As shown in FIG. 9A, after the gallery APP is started, the terminal device 100 may display a user interface 14 of the gallery APP. Album identifiers of a plurality of albums, for example, an album identifier 401 of an album 1, are displayed in the user interface 14. A name and a cover image of the album are displayed on the album identifier 401. As shown in FIG. 9A and FIG. 9B, it is detected that the user taps the album identifier 401. The terminal device 100 displays an album display interface 15. The album display interface 15 is used to display all images in the album 1.

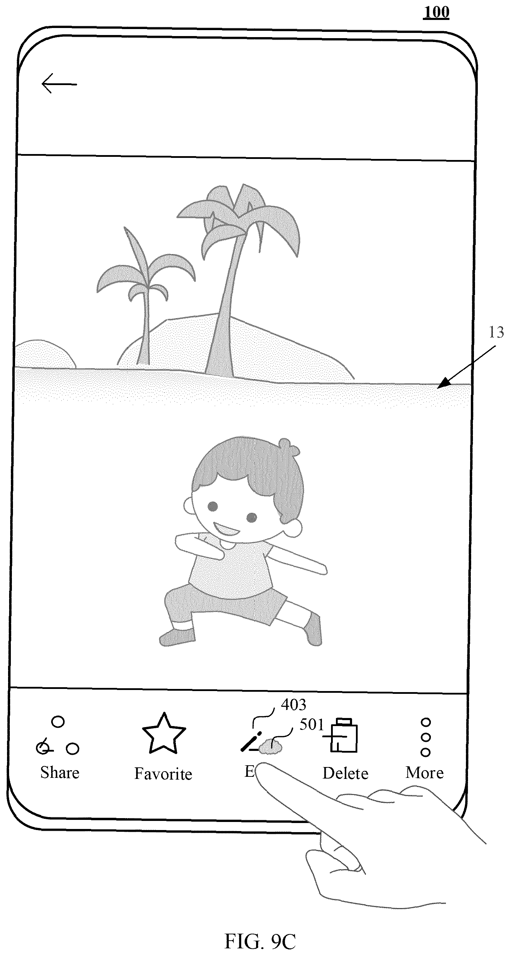

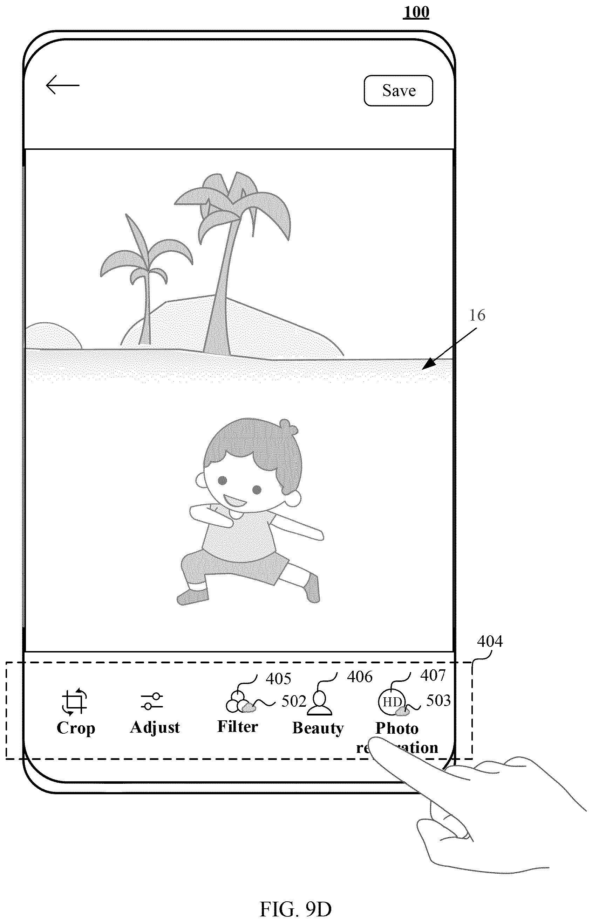

The user may select a to-be-edited image (for example, an image 2) in the album display interface 15. For example, as shown in FIG. 9B and FIG. 9C, the album display interface 15 includes a thumbnail 402 of the image 2. After detecting that the user taps the thumbnail 402, the terminal device 100 displays an image display interface 13 of the image 2. The image display interface 13 includes the image 2 and an edit control 403. As shown in FIG. 9C and FIG. 9D, after detecting that the user taps the edit control 403, the terminal device 100 displays an editing interface 16 of the image 2. The editing interface 16 includes an editing bar 404. A plurality of image processing modes that may be used to optimize the to-be-edited image is provided in the editing bar 404.

For example, as shown in FIG. 9D, the editing bar 404 includes processing controls, for example, a filter control 405, a beauty control 406, and a restoration control 407, corresponding to the plurality of image processing modes (for example, a filter, beauty, photo restoration, a special effect, and image cutout). The user may select an image processing mode corresponding to any processing control to perform enhancement processing on the image 2. The user may view more processing controls corresponding to the image processing modes by sliding left or right in the editing bar 404. In some embodiments, the gallery APP may obtain an image retouching parameter used when the image 2 is edited, and perform enhancement processing on the image 2 based on the image retouching parameter. The image retouching parameter indicates one or more image processing modes used when the image 2 is edited.

In some embodiments, an editing operation of selecting an image processing mode 1 (for example, photo restoration) by the user for the image 2 is detected. In response to the editing operation, if the image 2 is within the image enhancement capability range of the cloud, the image 2 may be uploaded to the cloud for enhancement processing. Enhancement processing may be performed on the image on the device if the image 2 is not within the image enhancement capability range.

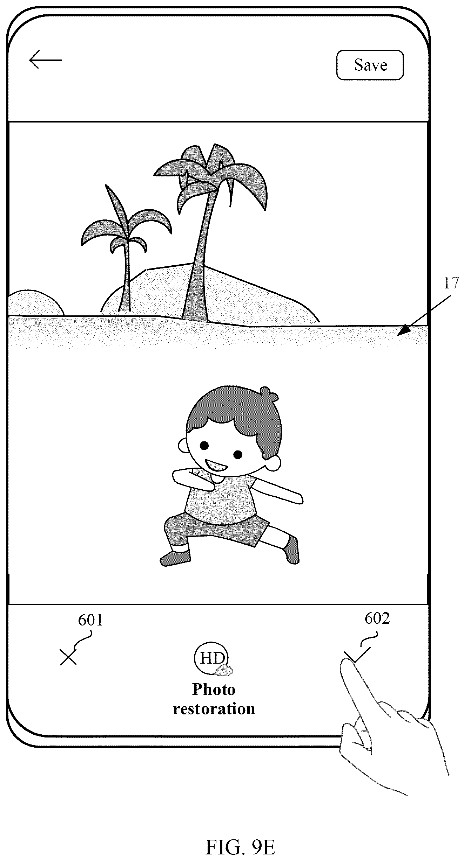

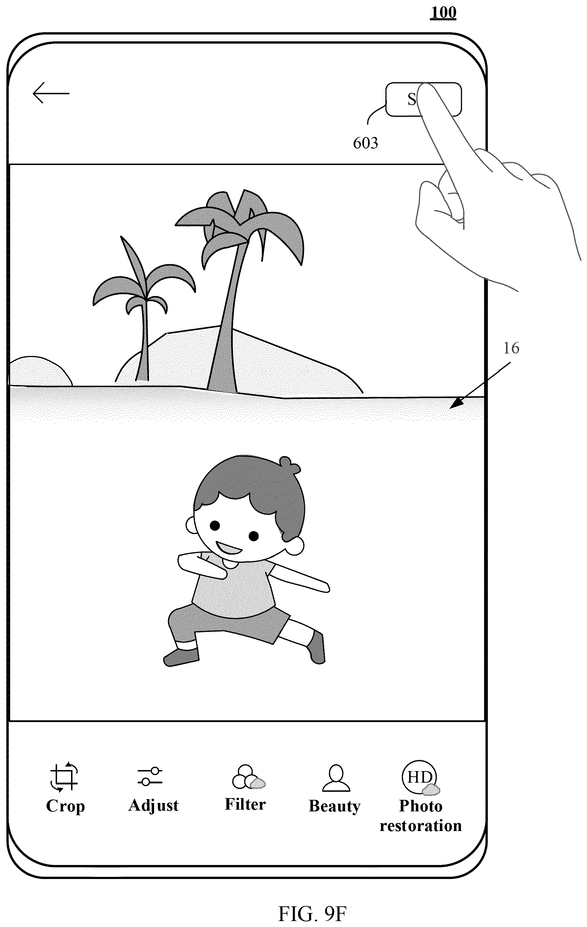

For example, photo restoration corresponds to the restoration control 407. As shown in FIG. 9D, the editing operation may include an input operation (for example, a tap operation) performed by the user on the restoration control 407. As shown in FIG. 9E, in response to the editing operation, if the image 2 is within the image enhancement capability range of the cloud, the image 2 may be uploaded to the cloud for enhancement processing. To be specific, photo restoration is performed on the image 2. A refined image that is delivered by the cloud and that is obtained after enhancement processing is obtained. The refined image of the image 2, a confirmation control 601, and a cancellation control 602 are displayed in a restoration display interface 17. The confirmation control 601 is used to accept photo restoration on the image 2. The cancellation control 602 is used to cancel photo restoration on the image 2. As shown in FIG. 9E and FIG. 9F, after it is detected that the user taps the confirmation control 601, the gallery APP returns to the editing interface 16 of the image 2, and displays the refined image of the image 2 in the editing interface 16. The editing interface 16 further includes a save control 603. After it is detected that the user taps the save control 603, the gallery APP may save the refined image of the image 2.

The image processing mode provided by the gallery APP, a process in which the user selects the image processing mode, and an image processing algorithm/model corresponding to each image processing mode on the device and the cloud are not specifically limited in embodiments of this application.

For the application scenario 2, for the image enhancement capability supported by the cloud and how to detect whether the image 2 is within the image enhancement capability range of the cloud, refer to related descriptions of the application scenario 1. Details are not described herein again.

The following describes an interface embodiment related to the application scenario 2.

In an implementation, as shown in FIG. 9B and FIG. 9C, the gallery APP detects an input operation (for example, a tap operation performed on the thumbnail 402 of the image 2) of viewing the image 2 by the user. In response to the input operation, the gallery APP displays the image display interface 13 of the image 2, and invokes the detection algorithm plug-in to detect whether image content of the image 2 belongs to a preset scene supported by the cloud. As shown in FIG. 9C, a cloud identifier 501 is displayed on the edit control 403 if the image content of the image 2 belongs to the preset scene, to indicate that the cloud supports performing enhancement processing on the current image.

In an implementation, as shown in FIG. 9C and FIG. 9D, the gallery APP detects an input operation (for example, a tap operation) performed by the user on the edit control 403. In response to the input operation, the gallery APP displays the editing interface 16 of the image 2, and invokes the detection algorithm plug-in to detect whether the image content of the image 2 belongs to the preset scene supported by the cloud. If the image content of the image 2 belongs to the preset scene, the detection algorithm plug-in determines an image processing mode supported by the cloud. The gallery APP displays a cloud identifier on/around a processing control corresponding to the image processing mode supported by the cloud, to indicate that the cloud supports the image processing mode corresponding to the processing control. For example, as shown in FIG. 9D, the cloud supports some or all filters, and the gallery APP displays a cloud identifier 502 on the filter control 405. The cloud supports photo restoration, and the gallery APP displays a cloud identifier 503 on the restoration control 407. The cloud does not support beauty, and the gallery APP does not display a cloud identifier on the beauty control 406.

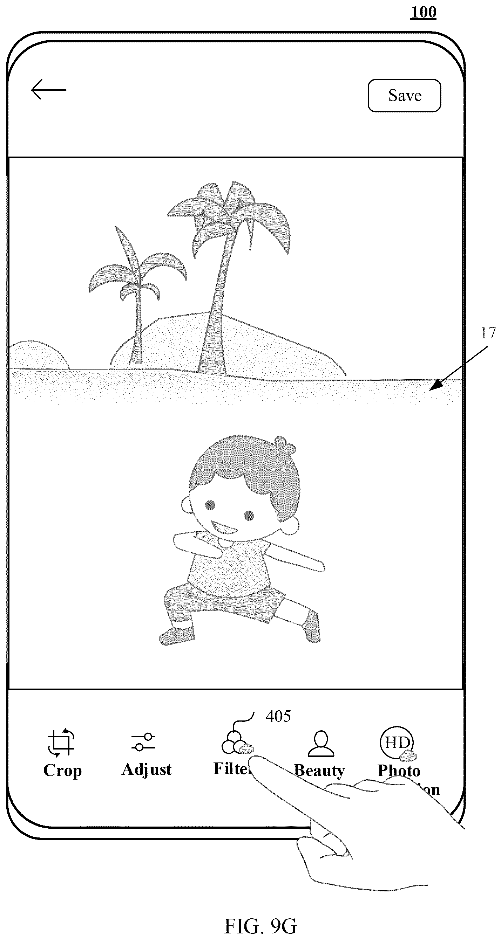

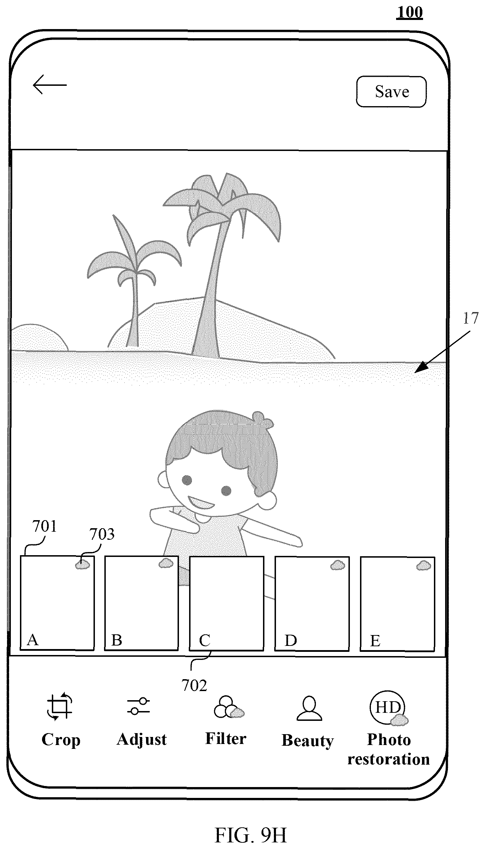

In an implementation, the filter is used as an example. The gallery APP provides a plurality of filter options. As shown in FIG. 9G and FIG. 9H, after an input operation (for example, a tap operation) performed on the filter control 405 is detected, the camera APP displays the plurality of filter options, for example, a filter option 701 of a filter A and a filter option 702 of a filter C. A filter effect diagram and a filter name are displayed for a filter option. The cloud supports some of the plurality of filters. When the image content of the image 2 belongs to the preset scene supported by the cloud, a cloud identifier is displayed on a filter option corresponding to the filter supported by the cloud, to indicate the filter supported by the cloud. For example, the cloud supports the filter A, but does not support the filter C. As shown in FIG. 9H, the gallery APP displays a cloud identifier 703 on the filter option 701 of the filter A, but does not display a cloud identifier on the filter option 702 of the filter C. Similarly, for another image processing mode (for example, beauty and the special effect) having a plurality of options, refer to related descriptions of the foregoing filter.

In some embodiments, the cloud supports different preset scenes in different image processing modes. The detection algorithm plug-in indicates a correspondence between an image processing mode supported by the cloud and a preset scene. For example, the cloud supports a beauty option A, and when the beauty option A is used for the to-be-edited image, a preset scene supported by the cloud includes a "portrait", and does not include another type of photographed object. The cloud supports a filter option A, and when the filter option A is used for the to-be-edited image, a preset scene supported by the cloud includes a "portrait", and further includes an "animal". If the image content of the image 2 belongs to a preset scene corresponding to the image processing mode 1 supported by the cloud, and the image processing mode 1 is the image processing mode supported by the cloud, a cloud identifier is displayed on a processing control corresponding to the image processing mode 1. For example, a processing control corresponding to the filter A may be the filter control 405 in the editing interface 16, or may be the filter option 701 of the filter A shown in FIG. 9H.

With reference to the foregoing embodiments, the following describes in detail a method procedure of a device-cloud collaborative image enhancement method related to the application scenario 2. Through implementation of the device-cloud collaborative image enhancement method provided in embodiments of this application, when editing the local image, the user uploads only the to-be-edited image within the image enhancement capability range of the cloud to the cloud for enhancement processing. This can avoid ineffective uploading, and obtains a refined image with higher quality while reducing a computing power requirement on and a load of a CPU of the device.

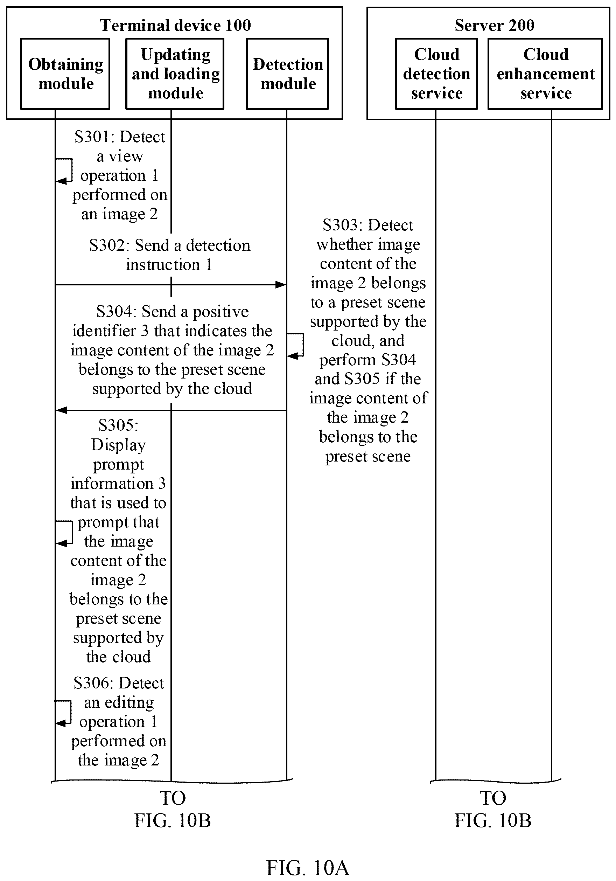

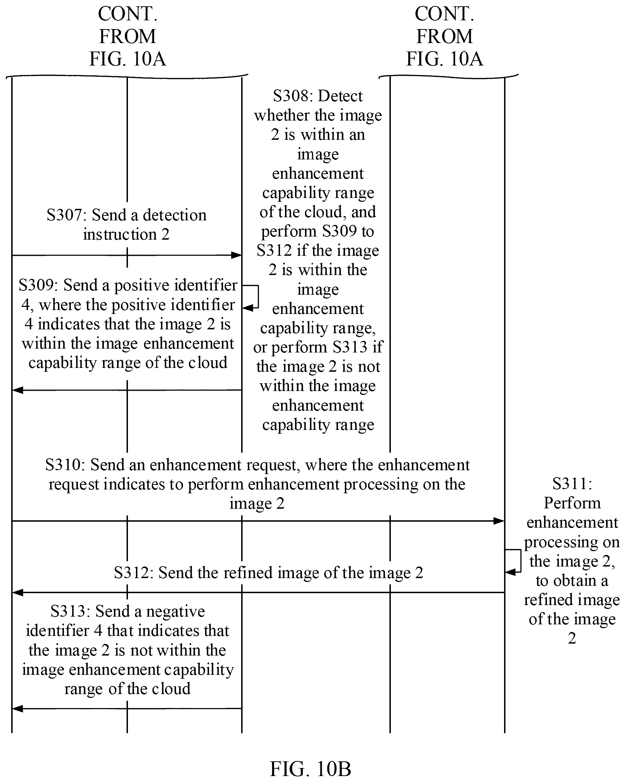

For example, as shown in FIG. 10A and FIG. 10B, the method procedure may include some or all of steps S301 to S309.

S301: The obtaining module of the terminal device 100 detects a view operation 1 performed on the image 2, and determines that the image 2 is a to-be-edited image.

S302: The obtaining module of the terminal device 100 sends a detection instruction 1 to the detection module in response to the view operation 1.

S303: In response to the detection instruction 1, the detection module of the terminal device 100 detects whether the image content of the image 2 belongs to the preset scene supported by the cloud, and performs S304 and S305 if the image content of the image 2 belongs to the preset scene.

S304: The detection module of the terminal device 100 sends a positive identifier 3 to the obtaining module, where the positive identifier 3 indicates that the image content of the image 2 belongs to the preset scene supported by the cloud.

In some embodiments, the detection module sends a negative identifier 3 to the obtaining module if the image content of the image 2 in step S303 does not belong to the preset scene supported by the cloud. The negative identifier 3 indicates that the image content of the image 2 does not belong to the preset scene supported by the cloud.

S305: The obtaining module of the terminal device 100 displays prompt information 3 based on the positive identifier 3, where the prompt information 3 indicates that the image content of the image 2 belongs to the preset scene supported by the cloud.

In some embodiments, when the image content of the image 2 belongs to the preset scene supported by the cloud, the cloud supports performing enhancement processing on the image 2. The prompt information 3 is used to prompt that the cloud supports performing enhancement processing on the image 2.

In some embodiments, the view operation 1 is used to select an image 2 from images displayed by the gallery APP, and trigger the gallery APP to display the image display interface of the image 2. For example, as shown in FIG. 9B and FIG. 9C, thumbnails of a plurality of images, for example, the thumbnail 402 of the image 2, is displayed in the album display interface 15 of the gallery APP. The view operation 1 includes a tap operation performed on the thumbnail 402. The image display interface 13 of the image 2 includes the edit control 403. The prompt information 3 may be displayed as the cloud identifier 501 displayed on the edit control 403.

In some embodiments, the view operation 1 is used to trigger the gallery APP to display an image editing interface 16 of the image 2. The detection instruction 1 is further used to obtain one or more image processing modes supported by the cloud. In step S304, the detection module further sends the one or more image processing modes to the obtaining module. The prompt information 3 indicates the one or more image processing modes supported by the cloud. For example, the image display interface 13 of the image 2 includes the edit control 403. The view operation 1 may include a tap operation performed on the edit control 403. The image editing interface 16 includes a processing control corresponding to each image processing mode provided by the gallery APP. After obtaining the image processing mode 1 supported by the cloud, the obtaining module displays the cloud identifier (for example, the cloud identifier 503 on the restoration control 407 or the cloud identifier 703 on the filter option 701 of the filter A) on the processing control corresponding to the image processing mode 1. The prompt information 3 includes the cloud identifier.

In some embodiments, the cloud supports different preset scenes in different image processing modes. To be specific, the detection module stores the correspondence between the image processing mode supported by the cloud and the preset scene. The one or more image processing modes that are supported by the cloud and that are fed back by the detection module to the obtaining module are image processing modes corresponding to the preset scene to which image content of the image 2 belongs.

It may be understood that the user can intuitively view, by displaying the processing control corresponding to the cloud identifier, an image processing mode corresponding to a specific processing control is the image processing mode supported by the cloud. This helps the user select an appropriate image processing mode when editing the image 2.

Herein, step S305 is optional. In some embodiments, the prompt information 3 does not need to be displayed.

S306: The obtaining module of the terminal device 100 detects the editing operation 1 performed on the image 2.

S307: The obtaining module of the terminal device 100 sends a detection instruction 2 to the detection module in response to the editing operation 1.

S308: In response to the detection instruction 2, the detection module of the terminal device 100 detects whether the image 2 is within the image enhancement capability range of the cloud, and performs S309 to S312 if the image 2 is within the image enhancement capability range, or performs S313 if the image 2 is not within the image enhancement capability range.

In some embodiments, the editing operation 1 is used to trigger the gallery APP to perform enhancement processing on the image 2 in the image processing mode selected by the user. For example, with reference to related descriptions in FIG. 9D to FIG. 9H, the image editing interface 16 of the image 2 provides the processing controls corresponding to the plurality of image processing modes. The editing operation 1 includes an input operation performed on the processing control corresponding to the image processing mode 1. For example, the processing control includes the restoration control 407 corresponding to photo restoration, and the editing operation 1 includes a tap operation performed on the restoration control 407. For example, the processing control includes the filter option 701 corresponding to the filter A, and the editing operation 1 includes a tap operation performed on the filter option 701.

In some embodiments, the detection module invokes the detection algorithm plug-in to identify and detect the to-be-edited image (for example, the image 2), so as to determine whether the image content of the image 2 belongs to the preset scene supported by the cloud and/or whether the image processing mode (for example, photo restoration or the filter A) used for the image 2 is the image processing modes supported by the cloud. In an implementation, when the image content of the image 2 belongs to the preset scene supported by the cloud, it is determined that the image 2 is within the image enhancement capability range of the cloud. In an implementation, when the image processing mode used for the image 2 is the image processing mode supported by the cloud, it is determined that the image 2 is within the image enhancement capability range of the cloud. In an implementation, when the image content of the image 2 belongs to the preset scene supported by the cloud, and the image processing mode used for the image 2 is the image processing mode supported by the cloud, it is determined that the image 2 is within the image enhancement capability range of the cloud. For details, refer to related descriptions of the application scenario 1. Details are not described herein again.

S309: The detection module of the terminal device 100 sends a positive identifier 4 to the obtaining module, where the positive identifier 4 indicates that the image 2 is within the image enhancement capability range of the cloud.

S310: The obtaining module of the terminal device 100 sends an enhancement request to the server 200 based on the positive identifier 4, where the enhancement request indicates to perform enhancement processing on the image 2.

S311: The cloud enhancement service of the server 200 performs enhancement processing on the image 2, to obtain the refined image of the image 2.

In some embodiments, the enhancement request further includes the image retouching parameter. The image retouching parameter indicates the one or more image processing modes used for editing the image 2. The server 200 performs image processing on the image 2 using an image processing algorithm/model corresponding to the one or more image processing modes, to obtain the refined image of the image 2.

S312: The server 200 sends the refined image of the image 2 to the terminal device 100.

After obtaining the refined image that is of the image 2 and that is fed back by the server 200, the terminal device 100 may further display and save the refined image of the image 2 for viewing by the user. For example, with reference to related descriptions in FIG. 9E, after the refined image that is of the image 2 and that is fed back by the cloud is obtained, the refined image of the image 2 is displayed in the restoration display interface 17, so that the user views an enhancement processing effect of the cloud.

S313: The detection module of the terminal device 100 sends a negative identifier 4 to the obtaining module, where the negative identifier 4 indicates that the image 2 is not within the image enhancement capability range of the cloud.

In this embodiment of this application, the terminal device 100 further includes a local enhancement service. Based on the negative identifier 4, the obtaining module may indicate the local enhancement service to perform enhancement processing on the image 2.

Step S302 to step S305 are optional. In some embodiments, before the editing operation 1 performed on the image 2 is detected, the image 2 does not need to be detected using the detection algorithm plug-in.

Step S307 to step S309 are optional. In some embodiments, in step S302 to step S304, whether the image content of the image 2 belongs to the preset scene supported by the cloud has been detected, and the image processing mode supported by the cloud has been obtained. After the editing operation 1 is detected in step S306, the detection algorithm plug-in does not need to be invoked to detect the image 2 again, and whether the image 2 is within the image enhancement capability range of the terminal device 100 may be directly determined based on a result fed back by the detection module in step S304 and the image processing mode used for the image 2. If the image 2 is within the image enhancement capability range of the terminal device 100, the enhancement request is directly sent to the server 200 in response to the editing operation 1.

Similar to that in the application scenario 1, in the application scenario 2, the detection algorithm plug-in deployed on the cloud may be updated with the image enhancement capability supported by the cloud. The terminal device 100 may download the updated detection algorithm plug-in through the network.

In some embodiments, after downloading the detection algorithm plug-in from the server 200, the gallery APP of the terminal device 100 may periodically request the server to update the detection algorithm plug-in, or each time the gallery APP is started, request the server to update the detection algorithm plug-in, or when the view operation 1 performed by the user on the to-be-edited image is detected, request the server to update the detection algorithm plug-in, or when the editing operation 1 performed by the user on the to-edited image is detected, request the server to update the detection algorithm plug-in. A moment for triggering update of the detection algorithm plug-in is not specifically limited in embodiments of this application.

Specifically, in the application scenario 2, for a procedure of updating the detection algorithm, refer to related descriptions of the application scenario 1. Details are not described herein again.

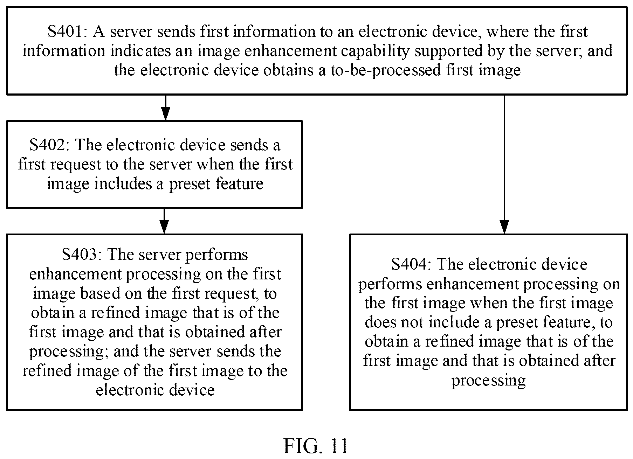

Based on the foregoing embodiments, this application provides a device-cloud collaborative image enhancement method. The method is applied to a communication system. The communication system includes an electronic device and a server. An image enhancement capability supported by the server is a capability of performing enhancement processing on an image including a preset feature. As shown in FIG. 11, the method includes steps S401 to S404.

S401: The server sends first information to the electronic device, where the first information indicates the image enhancement capability supported by the server; and the electronic device obtains a to-be-processed first image.

In this embodiment of this application, the electronic device may be the terminal device 100. The to-be-processed first image may be the foregoing to-be-processed image, and the to-be-processed image may be an image captured by the camera in real time, or may be a to-be-edited local image that is taken in non-real time.

In some embodiments, the preset feature includes at least one of the following: image content of an image belongs to a preset scene supported by the server and an image processing mode used for the image is an image processing mode supported by the server.

In some embodiments, the first information may be the foregoing detection algorithm plug-in. The detection algorithm plug-in is used to detect whether an image includes the preset feature. In some embodiments, the first information may alternatively indicate only the preset feature, and does not have a capability of detecting the preset feature. For example, the first information includes an identifier of the preset scene supported by the server, and/or an identifier of the image processing mode supported by the server.

S402: The electronic device sends a first request to the server when the first image includes the preset feature.

In this embodiment of this application, when the first image includes the preset feature, the first image is within an image enhancement capability range of the server. The first request may be the foregoing enhancement request.

S403: The server performs enhancement processing on the first image based on the first request, to obtain a refined image that is of the first image and that is obtained after processing; and the server sends the refined image of the first image to the electronic device.

S404: The electronic device performs enhancement processing on the first image when the first image does not include the preset feature, to obtain a refined image that is of the first image and that is obtained after processing.

In some embodiments, the method further includes: The electronic device sends an update request to the server; the server sends a detection algorithm plug-in of a latest version to the electronic device based on the update request; and the electronic device updates the detection algorithm plug-in to the detection algorithm plug-in of the latest version.

In some embodiments, that the electronic device obtains the to-be-processed first image includes: In response to a first photographing operation of a user, the electronic device obtains the first image captured by the camera.

For example, with reference to related descriptions of steps S106 and S107, the first photographing operation may be the photographing operation 1, and the first image may be the photo 1 taken by the camera.

In some embodiments, the first image is an original image captured by the camera, namely, a raw image captured by the camera, or an image (for example, the foregoing jpg/jpeg image) obtained after image processing (for example, initial image processing) is performed on the raw image. When the first image uploaded to the server is the raw image, that the server performs enhancement processing on the image includes: performing initial image processing on the image.

In some embodiments, the method further includes: The electronic device obtains a low-resolution image corresponding to the raw image captured by the camera, and when detecting that the low-resolution image includes the preset feature, determines that the first image includes the preset feature.

In some embodiments, before the electronic device obtains the to-be-processed first image, the method further includes: The electronic device displays a preview interface of a first application, where the preview interface is used to display a preview image, and the preview image is obtained based on a second image captured by the camera; the electronic device displays first prompt information in the preview interface when the second image captured by the camera includes the preset feature; and the electronic device receives the first photographing operation when displaying the first prompt information.

For example, with reference to related descriptions of steps S101 to S105, the second image may be the original image 1 captured by the camera, and the first prompt information may be the prompt information 1. The first application may be the APP 1, for example, a camera APP.

In some embodiments, the preview interface includes a first photographing control. The first prompt information includes a second photographing control. The first photographing operation includes an input operation performed on the second photographing control. The method further includes: The electronic device receives a second photographing operation performed on the first photographing control; and in response to the second photographing operation, the electronic device obtains a third image captured by the camera, and the electronic device performs enhancement processing on the third image, to obtain a refined image that is of the third image and that is obtained after processing.

For example, with reference to related descriptions in the interface embodiment 1, the first photographing control may be the photographing control 105, the first prompt information may be the prompt information 1, and the second photographing control may be the cloud photographing control 301. With reference to FIG. 4B to FIG. 4D, the first photographing operation may include a slide operation of the user from the photographing control 105 to the cloud photographing control 301. With reference to FIG. 4F, the first photographing operation may include a tap operation performed by the user on the cloud photographing control 301. The second photographing operation may be a native photographing operation on the camera APP, for example, a tap operation performed on the photographing control 105.

In some embodiments, the preview interface includes a first photographing control. The first photographing control is used to trigger the first application to take an image. The first prompt information is superimposed and displayed on the first photographing control. The first photographing operation includes an input operation performed on the first photographing control.

For example, with reference to related descriptions in the interface embodiments 3 and 4, the first photographing control may be the photographing control 105, the first prompt information may be the prompt information 302, and the prompt information 302 is superimposed and displayed on the photographing control 105 with the text "Cloud".

In some embodiments, before the electronic device displays the first prompt information in the preview interface, the method further includes: The first application starts a cloud camera in response to a first input operation. That the electronic device displays the first prompt information in the preview interface when the second image captured by the camera includes the preset feature includes: When the cloud camera is started, the electronic device displays the first prompt information in the preview interface when the second image captured by the camera includes the preset feature.

For example, with reference to related descriptions in the interface embodiment 3, the first input operation may be the input operation (for example, a tap operation) performed on the on/off control 108.

In some embodiments, after the first application displays the first prompt information, the method further includes: switching a photographing mode to a cloud photo mode. The first photographing operation is a photographing operation in the cloud photo mode.

In some embodiments, the electronic device is provided with a plurality of image processing modes used to optimize an image captured by the camera. The plurality of image processing modes include a first image processing mode. The preview interface includes a first processing control corresponding to the first image processing mode. Before the first photographing operation is received, the method further includes: The electronic device receives a second input operation performed on the first processing control; and in response to the second input operation, the electronic device determines that an image processing mode used for an image currently captured by the camera includes the first image processing mode, where an image processing mode used for the first image includes the first image processing mode.

The first image processing mode may be any one of the following: a photographing mode, a light effect, a filter, beauty, a special effect, makeup, body beauty, and the like. For example, with reference to related descriptions in FIG. 3E and FIG. 3F, the first image processing mode may be the portrait mode, the first processing control may be the portrait mode 103B, and the second input operation may be a tap operation performed on the portrait mode 103B. After the photographing mode is switched to the portrait mode, an image processing mode used for a currently captured image includes the portrait mode. For example, with reference to related descriptions in FIG. 3H to FIG. 3J, the first image processing mode may be the filter A, the first processing control may be the filter option 109 corresponding to the filter A, and the second input operation may be a tap operation performed on the filter option 109. After the filter A is selected through the second input operation, an image processing mode used for a currently captured image includes the filter A.

In some embodiments, the electronic device stores the first image. The electronic device is provided with a plurality of image processing modes used to optimize a local image. The plurality of image processing modes include a second image processing mode. The method further includes: The electronic device displays, in a second interface, the first image and a second processing control corresponding to the second image processing mode; and the electronic device receives a third input operation performed on the second processing control. That the electronic device sends the first request to the server when the first image includes the preset feature includes: The electronic device sends the first request to the server in response to the third input operation when the first image includes the preset feature, where an image processing mode used for the first image includes the second image processing mode.

With reference to related descriptions of steps S306 to S312, the second image may be a local image stored in the album APP, for example, the image 2, and the third input operation may be the editing operation 1. For example, with reference to related descriptions in FIG. 9D to FIG. 9H, the second interface may be the image editing interface 16, the second image processing mode may be photo restoration, the second processing control may include the restoration control 407 corresponding to photo restoration, and the third input operation includes a tap operation performed on the restoration control 407.

In some embodiments, when the first image includes the preset feature, the electronic device further displays second prompt information on the second interface along with the first image. The second prompt information is used to prompt that the server supports performing enhancement processing on the first image.

For example, with reference to related descriptions of step S305, the second prompt information may be the prompt information 3.

In some embodiments, the plurality of image processing modes further include a third image processing mode. The second interface further includes a third processing control corresponding to the third image processing mode. The first information indicates the image processing mode supported by the server. The server supports the second image processing mode. A first identifier is displayed on the second processing control. The server does not support the third image processing mode. The first identifier is not displayed on the third processing control. The first identifier indicates the image processing mode supported by the server.

For example, with reference to related descriptions in FIG. 9D to FIG. 9F, the first identifier may be the foregoing cloud identifier.

In some embodiments, when the server supports the second image processing mode, and image content of the first image belongs to the preset scene supported by the server, the first identifier is displayed on the second processing control.

In some embodiments, the first request indicates the image processing mode used for the first image. That the server performs enhancement processing on the first image based on the first request, to obtain the refined image of the first image includes: The server performs enhancement processing on the first image in the image processing mode used for the first image, to obtain the refined image of the first image.

In some embodiments, the image processing mode supported by the server includes a fourth image processing mode and a fifth image processing mode. A preset scene supported by the server in the fourth image processing mode is different from a preset scene supported by the server in the fifth image processing mode. The first information indicates a correspondence between the image processing mode and the preset scene that are supported by the server.

In some embodiments, the preset feature includes: A sixth image processing mode used for the image is the image processing mode supported by the server, and the image content of the image belongs to a preset scene corresponding to the sixth image processing mode supported by the server. The sixth image processing mode is any image processing mode supported by the server.

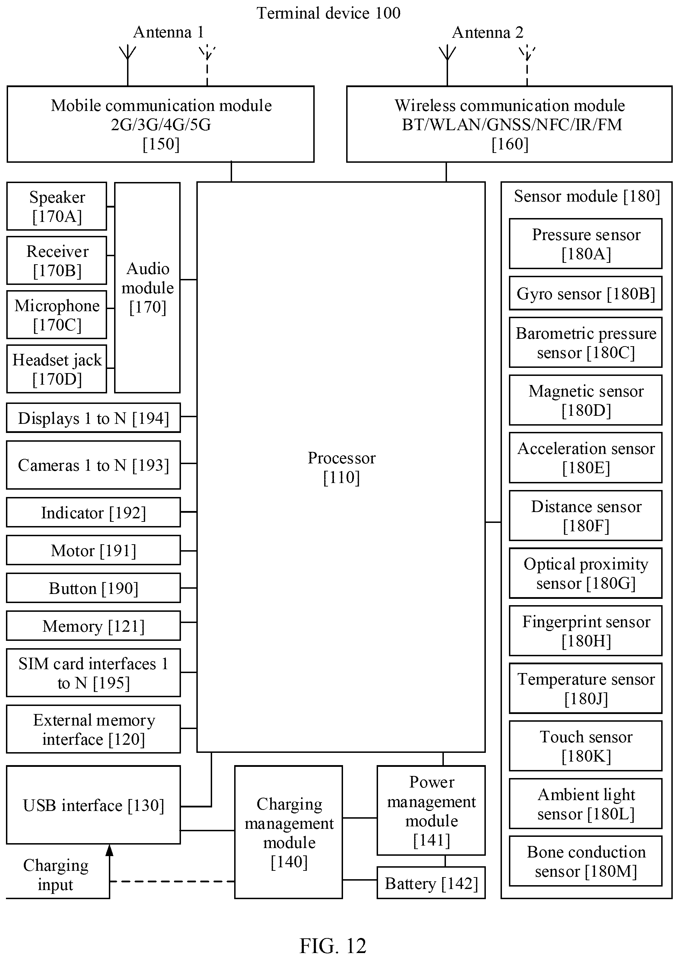

The following describes a structure of the terminal device 100 provided in embodiments of this application. FIG. 12 is a diagram of a structure of the terminal device 100.

The terminal device 100 may include a processor 110, an external memory interface 120, a memory 121, a universal serial bus (universal serial bus, USB) interface 130, a charging management module 140, a power management module 141, a battery 142, an antenna 1, an antenna 2, a mobile communication module 150, a wireless communication module 160, an audio module 170, a speaker 170A, a receiver 170B, a microphone 170C, a headset jack 170D, a sensor module 180, a button 190, a motor 191, an indicator 192, a camera 193, a display 194, a subscriber identification module (subscriber identification module, SIM) card interface 195, and the like. The sensor module 180 may include a pressure sensor 180A, a gyro sensor 180B, a barometric pressure sensor 180C, a magnetic sensor 180D, an acceleration sensor 180E, a distance sensor 180F, an optical proximity sensor 180G, a fingerprint sensor 180H, a temperature sensor 180J, a touch sensor 180K, an ambient light sensor 180L, a bone conduction sensor 180M, and the like.

It may be understood that the structure shown in this embodiment of the present invention does not constitute a specific limitation on the terminal device 100. In some other embodiments of this application, the terminal device 100 may include more or fewer components than those shown in the figure, or combine some of the components, or split some of the components, or have different arrangements of the components. The components shown in the figure may be implemented by hardware, software, or a combination of the software and the hardware.

The processor 110 may include one or more processing units. For example, the processor 110 may include an application processor (application processor, AP), a modem processor, a graphics processing unit (graphics processing unit, GPU), an image signal processor (image signal processor, ISP), a controller, a video codec, a digital signal processor (digital signal processor, DSP), a baseband processor, and/or a neural-network processing unit (neural-network processing unit, NPU). Different processing units may be independent devices, or may be integrated into one or more processors.

The controller may generate an operation control signal based on an instruction operation code and a time sequence signal, to complete control of instruction fetching and instruction execution.

A memory may be further disposed in the processor 110, and is configured to store instructions and data. In some embodiments, the memory in the processor 110 is a cache. The memory may store an instruction or data just used or cyclically used by the processor 110. If the processor 110 needs to use the instruction or the data again, the processor may directly invoke the instruction or the data from the memory. This avoids repeated access, and reduces waiting time of the processor 110, thereby improving system efficiency.

In some embodiments, the processor 110 may include one or more interfaces. The interface may include an inter-integrated circuit (inter-integrated circuit, I2C) interface, an inter-integrated circuit sound (inter-integrated circuit sound, I2S) interface, a pulse code modulation (pulse code modulation, PCM) interface, a universal asynchronous receiver/transmitter (universal asynchronous receiver/transmitter, UART) interface, a mobile industry processor interface (mobile industry processor interface, MIPI), a general-purpose input/output (general-purpose input/output, GPIO) interface, a subscriber identification module (subscriber identification module, SIM) interface, a universal serial bus (universal serial bus, USB) interface, and/or the like.

The I2C interface is a two-way synchronization serial bus, and includes a serial data line (serial data line, SDA) and a serial clock line (serial clock line, SCL). In some embodiments, the processor 110 may include a plurality of groups of I2C buses. The processor 110 may be separately coupled to the touch sensor 180K, a charger, a flash, the camera 193, and the like through different I2C bus interfaces. For example, the processor 110 may be coupled to the touch sensor 180K through an I2C interface, so that the processor 110 communicates with the touch sensor 180K through the I2C bus interface, to implement a touch function of the terminal device 100.

The I2S interface may be configured to perform audio communication. In some embodiments, the processor 110 may include a plurality of groups of I2S buses. The processor 110 may be coupled to the audio module 170 through the I2S bus, to implement communication between the processor 110 and the audio module 170. In some embodiments, the audio module 170 may transmit an audio signal to the wireless communication module 160 through the I2S interface, to implement a function of answering a call through a Bluetooth headset.

The PCM interface may also be configured to: perform audio communication, and sample, quantize, and encode an analog signal. In some embodiments, the audio module 170 may be coupled to the wireless communication module 160 through a PCM bus interface. In some embodiments, the audio module 170 may alternatively transmit an audio signal to the wireless communication module 160 through the PCM interface, to implement a function of answering a call through a Bluetooth headset. Both the I2S interface and the PCM interface may be configured to perform audio communication.

The UART interface is a universal serial data bus, and is configured to perform asynchronous communication. The bus may be a two-way communication bus. The bus converts to-be-transmitted data between serial communication and parallel communication. In some embodiments, the UART interface is usually configured to connect the processor 110 to the wireless communication module 160. For example, the processor 110 communicates with a Bluetooth module in the wireless communication module 160 through the UART interface, to implement a Bluetooth function. In some embodiments, the audio module 170 may transmit an audio signal to the wireless communication module 160 through the UART interface, to implement a function of playing music through a Bluetooth headset.

The MIPI interface may be configured to connect the processor 110 to a peripheral device like the display 194 or the camera 193. The MIPIinterface includes a camera serial interface (camera serial interface, CSI), a display serial interface (display serial interface, DSI), and the like. In some embodiments, the processor 110 communicates with the camera 193 through the CSI, to implement a photographing function of the terminal device 100. The processor 110 communicates with the display 194 through the DSI interface, to implement a display function of the terminal device 100.

The GPIO interface may be configured using software. The GPIO interface may be configured as a control signal or a data signal. In some embodiments, the GPIO interface may be configured to connect the processor 110 to the camera 193, the display 194, the wireless communication module 160, the audio module 170, the sensor module 180, or the like. The GPIO interface may alternatively be configured as an I2C interface, an I2S interface, a UART interface, an MIPI interface, or the like.

The USB interface 130 is an interface that conforms to a USB standard specification, and may be specifically a mini USB interface, a micro USB interface, a USB Type-C interface, or the like. The USB interface 130 may be configured to connect to a charger to charge the terminal device 100, or may be configured to transmit data between the terminal device 100 and a peripheral device, or may be configured to connect to a headset for playing an audio through the headset. The interface may alternatively be configured to connect to another electronic device like an AR device.

It may be understood that an interface connection relationship between the modules that are shown in this embodiment of the present invention is merely an example for description, and does not constitute a limitation on the structure of the terminal device 100. In some other embodiments of this application, the terminal device 100 may alternatively use an interface connection manner different from that in the foregoing embodiment, or a combination of a plurality of interface connection manners.

The charging management module 140 is configured to receive a charging input from a charger. The charger may be a wireless charger or a wired charger. In some embodiments of wired charging, the charging management module 140 may receive a charging input of a wired charger through the USB interface 130. In some embodiments of wireless charging, the charging management module 140 may receive a wireless charging input through a wireless charging coil of the terminal device 100. When charging the battery 142, the charging management module 140 may further supply power to an electronic device via the power management module 141.

The power management module 141 is configured to connect to the battery 142, the charging management module 140, and the processor 110. The power management module 141 receives an input from the battery 142 and/or an input from the charging management module 140, and supplies power to the processor 110, the memory 121, the display 194, the camera 193, the wireless communication module 160, and the like. The power management module 141 may be further configured to monitor parameters such as a battery capacity, a battery cycle count, and a battery health status (electric leakage and impedance). In some other embodiments, the power management module 141 may alternatively be disposed in the processor 110. In some other embodiments, the power management module 141 and the charging management module 140 may alternatively be disposed in a same device.

A wireless communication function of the terminal device 100 may be implemented via the antenna 1, the antenna 2, the mobile communication module 150, the wireless communication module 160, the modem processor, the baseband processor, and the like.

The antenna 1 and the antenna 2 are configured to: transmit and receive electromagnetic wave signals. Each antenna in the terminal device 100 may be configured to cover one or more communication frequency bands. Different antennas may be further multiplexed, to improve antenna utilization. For example, the antenna 1 may be multiplexed as a diversity antenna of a wireless local area network. In some other embodiments, the antenna may be used in combination with a tuning switch.

The mobile communication module 150 may provide a solution that is applied to the terminal device 100 and that includes wireless communication such as 2G, 3G, 4G, and 5G. The mobile communication module 150 may include at least one filter, a switch, a power amplifier, a low noise amplifier (low noise amplifier, LNA), and the like. The mobile communication module 150 may receive an electromagnetic wave through the antenna 1, perform processing such as filtering and amplification on the received electromagnetic wave, and transmit a processed electromagnetic wave to the modem processor for demodulation. The mobile communication module 150 may further amplify a signal modulated by the modem processor, and convert an amplified signal into an electromagnetic wave for radiation through the antenna 1. In some embodiments, at least some functional modules of the mobile communication module 150 may be disposed in the processor 110. In some embodiments, at least some functional modules of the mobile communication module 150 may be disposed in a same device as at least some modules of the processor 110.

The modem processor may include a modulator and a demodulator. The modulator is configured to modulate a to-be-sent low-frequency baseband signal into a medium/high-frequency signal. The demodulator is configured to demodulate a received electromagnetic wave signal into a low-frequency baseband signal. Then, the demodulator transmits the low-frequency baseband signal obtained through demodulation to the baseband processor for processing. The low-frequency baseband signal is processed by the baseband processor, and then transmitted to the application processor. The application processor outputs a sound signal through an audio device (which is not limited to the speaker 170A, the receiver 170B, and the like), or displays an image or a video through the display 194. In some embodiments, the modem processor may be an independent device. In some other embodiments, the modem processor may be independent of the processor 110, and is disposed in a same device as the mobile communication module 150 or another functional module.

The wireless communication module 160 may provide a solution that is applied to the terminal device 100 and that includes wireless communication such as a wireless local area network (wireless local area network, WLAN) (for example, a wireless fidelity (wireless fidelity, Wi-Fi) network), Bluetooth (Bluetooth, BT), a global navigation satellite system (global navigation satellite system, GNSS), frequency modulation (frequency modulation, FM), near field communication (near field communication, NFC), and an infrared (infrared, IR) technology. The wireless communication module 160 may be one or more devices integrating at least one communication processing module. The wireless communication module 160 receives an electromagnetic wave through the antenna 2, performs demodulation and filtering processing on an electromagnetic wave signal, and sends a processed signal to the processor 110. The wireless communication module 160 may further receive a to-be-sent signal from the processor 110, perform frequency modulation and amplification on the to-be-sent signal, and convert a processed signal into an electromagnetic wave for radiation through the antenna 2.

In some embodiments, in the terminal device 100, the antenna 1 is coupled to the mobile communication module 150, and the antenna 2 is coupled to the wireless communication module 160, so that the terminal device 100 can communicate with a network and another device using a wireless communication technology. The wireless communication technology may include a global system for mobile communications (global system for mobile communications, GSM), a general packet radio service (general packet radio service, GPRS), code division multiple access (code division multiple access, CDMA), wideband code division multiple access (wideband code division multiple access, WCDMA), time-division code division multiple access (time-division code division multiple access, TD-SCDMA), long term evolution (long term evolution, LTE), BT, a GNSS, a WLAN, NFC, FM, an IR technology, and/or the like. The GNSS may include a global positioning system (global positioning system, GPS), a global navigation satellite system (global navigation satellite system, GLONASS), a BeiDou navigation satellite system (BeiDou navigation satellite system, BDS), a quasi-zenith satellite system (quasi-zenith satellite system, QZSS), and/or a satellite based augmentation system (satellite based augmentation system, SBAS).

The terminal device 100 implements a display function via the GPU, the display 194, the application processor, and the like. The GPU is a microprocessor for image processing, and is connected to the display 194 and the application processor. The GPU is configured to: perform mathematical and geometric computation, and render an image. The processor 110 may include one or more GPUs, and execute program instructions to generate or change display information.

The display 194 is configured to display an image, a video, and the like. The display 194 includes a display panel. The display panel may be a liquid crystal display (liquid crystal display, LCD), an organic light-emitting diode (organic light-emitting diode, OLED), an active-matrix organic light-emitting diode (active-matrix organic light-emitting diode, AMOLED), a flexible light-emitting diode (flexible light-emitting diode, FLED), a mini-LED, a micro-LED, a micro-OLED, a quantum dot light-emitting diode (quantum dot light-emitting diode, QLED), or the like. In some embodiments, the terminal device 100 may include one or N displays 194, where N is a positive integer greater than 1.

The terminal device 100 may implement a photographing function via the ISP, the camera 193, the video codec, the GPU, the display 194, the application processor, and the like.

The ISP is configured to process data fed back by the camera 193. For example, during photographing, a shutter is pressed, and light is transmitted to a photosensitive element of the camera through a lens. An optical signal is converted into an electrical signal, and the photosensitive element of the camera transmits the electrical signal to the ISP for processing, to convert the electrical signal into a visible image. The ISP may further perform algorithm optimization on noise and brightness of the image. The ISP may further optimize parameters such as exposure and a color temperature of a photographing scene. In some embodiments, the ISP may be disposed in the camera 193.

The camera 193 is configured to capture a static image or a video. An optical image of an object is generated through a lens, and is projected to a photosensitive element. The photosensitive element may be a charge-coupled device (charge-coupled device, CCD) or a complementary metal-oxide-semiconductor (complementary metal-oxide-semiconductor, CMOS) phototransistor. The photosensitive element converts an optical signal into an electrical signal, and then transmits the electrical signal to the ISP to convert the electrical signal into a digital image signal. The ISP outputs the digital image signal to the DSP for processing. The DSP converts the digital image signal into an image signal in a standard format like RGB or YUV. In some embodiments, the terminal device 100 may include one or N cameras 193, where N is a positive integer greater than 1.

The digital signal processor is configured to process a digital signal, and may further process another digital signal in addition to a digital image signal. For example, when the terminal device 100 selects a frequency, the digital signal processor is configured to perform Fourier transform on frequency energy.

The video codec is configured to compress or decompress a digital video. The terminal device 100 may support one or more video codecs. In this way, the terminal device 100 can play or record videos in a plurality of encoding formats, for example, moving picture experts group (moving picture experts group, MPEG)-1, MPEG-2, MPEG-3, and MPEG-4.

The NPU is a neural-network (neural-network, NN) computing processor, quickly processes input information by referring to a structure of a biological neural network, for example, by referring to a mode of transfer between human brain neurons, and may further continuously perform self-learning. Applications such as intelligent cognition of the terminal device 100, for example, image recognition, facial recognition, speech recognition, and text understanding, may be implemented via the NPU.

The memory 121 may include one or more random access memories (random access memories, RAMs) and one or more non-volatile memories (non-volatile memories, NVMs).

The random access memory may include a static random access memory (static random access memory, SRAM), a dynamic random access memory (dynamic random access memory, DRAM), a synchronous dynamic random access memory (synchronous dynamic random access memory, SDRAM), a double data rate synchronous dynamic random access memory (double data rate synchronous dynamic random access memory, DDR SDRAM, for example, a 5th generation DDR SDRAM, which is generally referred to as a DDR5 SDRAM), and the like. The non-volatile memory may include a magnetic disk storage device and a flash memory (flash memory).

The flash memory may be classified, based on an operation principle, into an NOR flash, an NAND flash, a 3D NAND flash, and the like; may be classified, based on a quantity of electric potential levels of a cell, into a single-level cell (single-level cell, SLC), a multi-level cell (multi-level cell, MLC), a triple-level cell (triple-level cell, TLC), a quad-level cell (quad-level cell, QLC), and the like; or the flash memory may be classified, based on storage specifications, into a universal flash storage (English: universal flash storage, UFS), an embedded multimedia memory (embedded multimedia Card, eMMC), and the like.

The random access memory may be directly read and written by using the processor 110. The random access memory may be configured to store an executable program (for example, machine instructions) in an operating system or another running program, and may be further configured to store data of a user, data of an application, and the like.

The non-volatile memory may also store the executable program, the data of the user, the data of the application, and the like, which may be loaded into the random access memory in advance for directly reading and writing by the processor 110.

The external memory interface 120 may be configured to connect to an external non-volatile memory, to extend a storage capability of the terminal device 100. The external non-volatile memory communicates with the processor 110 through the external memory interface 120, to implement a data storage function. For example, files such as music and a video are stored in the external non-volatile memory.

The terminal device 100 may implement an audio function, for example, music playing or recording, via the audio module 170, the speaker 170A, the receiver 170B, the microphone 170C, the headset jack 170D, the application processor, and the like.

The audio module 170 is configured to convert digital audio information into an analog audio signal output, and is also configured to convert an analog audio input into a digital audio signal. The audio module 170 may be further configured to: encode and decode audio signals. In some embodiments, the audio module 170 may be disposed in the processor 110, or some functional modules of the audio module 170 are disposed in the processor 110.

The speaker 170A, also referred to as a "loudspeaker", is configured to convert an audio electrical signal into a sound signal. The terminal device 100 may be configured to listen to music or answer a call in a hands-free mode via the speaker 170A.

The receiver 170B, also referred to as an "earpiece", is configured to convert an audio electrical signal into a sound signal. When a call is answered or voice information is listened to via the terminal device 100, the receiver 170B may be put close to a human ear to listen to a voice.

The microphone 170C, also referred to as a "mike" or a "mic", is configured to convert a sound signal into an electrical signal. When making a call or sending a voice message, the user may make a sound near the microphone 170C through the mouth of the user, to input a sound signal to the microphone 170C. At least one microphone 170C may be disposed in the terminal device 100. In some other embodiments, two microphones 170C may be disposed in the terminal device 100, to implement a noise reduction function in addition to collecting a sound signal. In some other embodiments, three, four, or more microphones 170C may be alternatively disposed in the terminal device 100, to collect a sound signal, implement noise reduction, identify a sound source, implement a directional recording function, and the like.

The headset jack 170D is configured to connect to a wired headset. The headset jack 170D may be a USB interface 130, or may be a 3.5 mm open mobile terminal platform (open mobile terminal platform, OMTP) standard interface or cellular telecommunications industry association of the USA (cellular telecommunications industry association of the USA, CTIA) standard interface.

The pressure sensor 180A is configured to sense a pressure signal, and may convert the pressure signal into an electrical signal. In some embodiments, the pressure sensor 180A may be disposed on the display 194. There are a plurality of types of pressure sensors 180A, for example, a resistive pressure sensor, an inductive pressure sensor, and a capacitive pressure sensor.

The gyro sensor 180B may be configured to determine a motion posture of the terminal device 100. In some embodiments, angular velocities of the terminal device 100 around three axes (namely, x, y, and z axes) may be determined via the gyro sensor 180B. The gyro sensor 180B may be configured to implement image stabilization during photographing.

The barometric pressure sensor 180C is configured to measure barometric pressure. In some embodiments, the terminal device 100 calculates an altitude by using a barometric pressure value measured by the barometric pressure sensor 180C, to assist in positioning and navigation.

The magnetic sensor 180D includes a Hall sensor. The terminal device 100 may detect opening or closing of a flip cover via the magnetic sensor 180D.

The acceleration sensor 180E may detect magnitude of accelerations of the terminal device 100 in various directions (usually on three axes).

The distance sensor 180F is configured to measure a distance. The terminal device 100 may measure the distance in an infrared manner or a laser manner.

The optical proximity sensor 180G may include, for example, a light-emitting diode (LED) and a photodetector, for example, a photodiode. The light-emitting diode may be an infrared light-emitting diode.

The ambient light sensor 180L is configured to sense ambient light brightness. The terminal device 100 may adaptively adjust brightness of the display 194 based on the sensed ambient light brightness.

The fingerprint sensor 180H is configured to collect a fingerprint. The terminal device 100 may use a feature of the collected fingerprint to implement fingerprint-based unlocking, application lock access, fingerprint-based photographing, fingerprint-based call answering, and the like.

The temperature sensor 180J is configured to detect a temperature. In some embodiments, the terminal device 100 executes a temperature processing policy based on the temperature detected by the temperature sensor 180J.

The touch sensor 180K is also referred to as a "touch device". The touch sensor 180K may be disposed on the display 194, and the touch sensor 180K and the display 194 form a touchscreen that is also referred to as a "touch screen". The touch sensor 180K is configured to detect a touch operation performed on or near the touch sensor. The touch sensor may transfer the detected touch operation to the application processor, to determine a type of the touch event. A visual output related to the touch operation may be provided via the display 194. In some other embodiments, the touch sensor 180K may alternatively be disposed on a surface of the terminal device 100 at a location different from that of the display 194.

The bone conduction sensor 180M may obtain a vibration signal. In some embodiments, the bone conduction sensor 180M may obtain a vibration signal of a vibration bone of a human vocal-cord part.

The button 190 includes a power button, a volume button, and the like. The button 190 may be a mechanical button, or may be a touch button. The terminal device 100 may receive a button input, and generate a button signal input related to a user setting and function control of the terminal device 100.

The motor 191 may generate a vibration prompt. The motor 191 may be configured to provide an incoming call vibration prompt and a touch vibration feedback.

The indicator 192 may be an indicator light, and may be configured to indicate a charging status or a power change, or may be configured to indicate a message, a missed call, a notification, or the like.

The SIM card interface 195 is configured to connect to a SIM card.

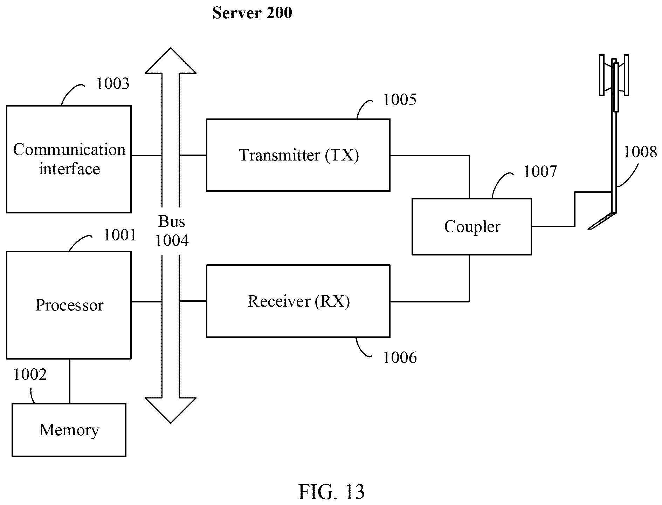

The following describes a structure of the server 200 provided in embodiments of this application. FIG. 13 shows an example of a structure of the server 200 according to an embodiment of this application.

As shown in FIG. 13, the server 200 may include one or more processors 1001, a memory 1002, a communication interface 1003, a transmitter 1005, a receiver 1006, a coupler 1007, and an antenna 1008. These components may be connected to each other through a bus 1004 or in another manner. In FIG. 13, an example in which these components are connected to each other through the bus is used.

The communication interface 1003 may be used by the server 200 to communicate with another communication device, for example, the terminal device 100. Specifically, the communication interface 1003 may be a 3G communication interface, a 4G communication interface, a 5G communication interface, a future new radio communication interface, or the like. In addition to a wireless communication interface, a wired communication interface 1003, for example, a local access network (local access network, LAN) interface, may be further configured for the server 200. The transmitter 1005 may be configured to perform transmission processing on a signal output by the processor 1001. The receiver 1006 may be configured to perform receiving processing on a mobile communication signal received by the antenna 1008.

In some embodiments of this application, the transmitter 1005 and the receiver 1006 may be considered as a wireless modem. In the server 200, there may be one or more transmitters 1005 and receivers 1006. The antenna 1008 may be configured to convert electromagnetic energy in a transmission line into an electromagnetic wave in free space, or convert an electromagnetic wave in free space into electromagnetic energy in a transmission line. The coupler 1007 is configured to: divide a mobile communication signal received by the antenna 1008 into a plurality of signals, and allocate the plurality of signals to a plurality of receivers 1006.

The memory 1002 is coupled to the processor 1001, and is configured to store various software programs and/or a plurality of groups of instructions. Specifically, the memory 1002 may include a high-speed random access memory, and may further include a non-volatile memory, for example, one or more disk storage devices, a flash memory device, or another non-volatile solid-state storage device. The memory 1002 may store a network communication program. The network communication program may be used to communicate with one or more additional devices, one or more terminal devices, and one or more network devices.

In some embodiments of this application, the memory 1002 may be configured to store a program for implementing, on the server 200, the application distribution method provided in one or more embodiments of this application. For an implementation of the application distribution method provided in the one or more embodiments of this application, refer to the foregoing embodiments.

The processor 1001 may be configured to: read and execute computer-readable instructions. Specifically, the processor 1001 may be configured to: invoke a program stored in the memory 1002, for example, the program for implementing, on the server 200, the application distribution method provided in the one or more embodiments of this application, and execute instructions included in the program.

It should be noted that the server 200 shown in FIG. 13 is merely an implementation in embodiments of this application. During actual application, the server 200 may alternatively include more or fewer components. This is not limited herein.

For more details about a function and a working principle of the server 200, refer to related content in the foregoing embodiments. Details are not described herein again.

The implementations of this application may be randomly combined, to achieve different technical effect.

The foregoing embodiments may be all or partially implemented by software, hardware, firmware, or any combination thereof. When being implemented by software, the foregoing embodiments may be all or partially implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line) or wireless (for example, infrared, radio, or microwave) manner. The computer-readable storage medium may be any usable medium accessible by a computer, or a data storage device like a server or a data center, integrating one or more usable media. The usable medium may be a magnetic medium (for example, a floppy disk, a hard disk, or a magnetic tape), an optical medium (for example, a DVD), a semiconductor medium (for example, a solid state disk (solid state disk, SSD)), or the like.

A person of ordinary skill in the art may understand that all or some of the procedures of the methods in the foregoing embodiments may be implemented by a computer program instructing relevant hardware. The program may be stored in a computer-readable storage medium. When the program is executed, the procedures of the foregoing method embodiments may be included. The foregoing storage medium includes any medium that can store program code, for example, a ROM, a random access memory RAM, a magnetic disk, or an optical disc.

In conclusion, the foregoing descriptions are merely embodiments of the technical solutions of the present invention, but are not intended to limit the protection scope of the present invention. Any modification, equivalent replacement, improvement, or the like made according to the disclosure of the present invention shall fall within the protection scope of the present invention.

## Claims

1. A device-cloud collaborative image enhancement method, applied to an electronic device, wherein the method comprises:
obtaining, by the electronic device, first information sent by the server, wherein the first information indicates an image enhancement capability supported by the server, and the image enhancement capability supported by the server comprises a capability of performing enhancement processing on an image having a preset feature;
obtaining, by the electronic device, a to-be-processed first image; and sending, by the electronic device, a first request to the server when the first image comprises the preset feature; and
receiving, by the electronic device, a refined image that is of the first image and that is sent by the server, wherein the refined image of the first image is an image obtained after the server performs enhancement processing on the first image based on the first request; or
performing, by the electronic device, enhancement processing on the first image when the first image does not comprise the preset feature, to obtain a refined image that is of the first image and that is obtained after processing.

2. The method according to claim 1, wherein
the preset feature comprises at least one of the following: image content of an image belongs to a preset scene supported by the server and an image processing mode used for the image is an image processing mode supported by the server.

3. The method according to claim 1, wherein the first information comprises a detection algorithm plug-in, and the detection algorithm plug-in is used to detect whether an image comprises the preset feature.

4. The method according to claim 3, wherein the method further comprises:
sending, by the electronic device, an update request to the server;
receiving, by the electronic device, a detection algorithm plug-in of a latest version sent by the server; and
updating, by the electronic device, the detection algorithm plug-in to the detection algorithm plug-in of the latest version.

5. The method according to any one of claims 1 to 4, wherein obtaining, by the electronic device, the to-be-processed first image comprises:
in response to a first photographing operation of a user, obtaining, by the electronic device, the first image captured by a camera.

6. The method according to claim 5, wherein the first image is a raw image captured by the camera, or the first image is an image obtained after image processing is performed on the raw image.

7. The method according to claim 5, wherein before obtaining, by the electronic device, the to-be-processed first image, the method further comprises:
displaying, by the electronic device, a preview interface of a first application, wherein the preview interface is used to display a preview image, and the preview image is obtained based on a second image captured by the camera;
displaying, by the electronic device, first prompt information in the preview interface when the second image captured by the camera comprises the preset feature; and
receiving, by the electronic device, the first photographing operation when displaying the first prompt information.

8. The method according to claim 7, wherein the preview interface comprises a first photographing control;
the first prompt information comprises a second photographing control, and the first photographing operation comprises an input operation performed on the second photographing control; and
the method further comprises:
receiving a second photographing operation performed on the first photographing control; and
in response to the second photographing operation, obtaining, by the electronic device, a third image captured by the camera, and performing, by the electronic device, enhancement processing on the third image, to obtain a refined image that is of the third image and that is obtained after processing.

9. The method according to claim 7, wherein the preview interface comprises a first photographing control, and the first photographing control is used to trigger the first application to take an image; and
the first prompt information is superimposed and displayed on the first photographing control, and the first photographing operation comprises an input operation performed on the first photographing control.

10. The method according to any one of claims 7 to 9, wherein
before displaying, by the electronic device, the first prompt information in the preview interface, the method further comprises:
starting, by the first application, a cloud camera in response to a first input operation; and
displaying, by the electronic device, the first prompt information in the preview interface when the second image captured by the camera comprises the preset feature comprises:
when the cloud camera is started, displaying, by the electronic device, the first prompt information in the preview interface when the second image captured by the camera comprises the preset feature.

11. The method according to any one of claims 7 to 10, wherein the electronic device is provided with a plurality of image processing modes used to optimize an image captured by the camera, the plurality of image processing modes comprise a first image processing mode, and the preview interface comprises a first processing control corresponding to the first image processing mode; and before receiving the first photographing operation, the method further comprises:
receiving a second input operation performed on the first processing control; and
in response to the second input operation, determining, by the electronic device, that an image processing mode used for an image currently captured by the camera comprises the first image processing mode, wherein an image processing mode used for the first image comprises the first image processing mode.

12. The method according to any one of claims 1 to 4, wherein the electronic device stores the first image, the electronic device is provided with a plurality of image processing modes used to optimize a local image, and the plurality of image processing modes comprise a second image processing mode; and the method further comprises:
displaying, by the electronic device in a second interface, the first image and a second processing control corresponding to the second image processing mode; and
receiving, by the electronic device, a third input operation performed on the second processing control; and
sending, by the electronic device, the first request to the server when the first image comprises the preset feature comprises:
sending, by the electronic device, the first request to the server in response to the third input operation when the first image comprises the preset feature, wherein an image processing mode used for the first image comprises the second image processing mode.

13. The method according to claim 12, wherein the plurality of image processing modes further comprise a third image processing mode, the second interface further comprises a third processing control corresponding to the third image processing mode, and the first information indicates the image processing mode supported by the server;
the server supports the second image processing mode, and a first identifier is displayed on the second processing control;
the server does not support the third image processing mode, and the first identifier is not displayed on the third processing control; and
the first identifier indicates the image processing mode supported by the server.

14. The method according to claim 2, wherein
the image processing mode supported by the server comprises a fourth image processing mode and a fifth image processing mode, a preset scene supported by the server in the fourth image processing mode is different from a preset scene supported by the server in the fifth image processing mode, and the first information indicates a correspondence between the image processing mode and the preset scene that are supported by the server.

15. A device-cloud collaborative image enhancement method, applied to a server, wherein an image enhancement capability supported by the server is a capability of performing enhancement processing on an image having a preset feature, and the method comprises:
sending, by the server, first information to the electronic device, wherein the first information indicates the image enhancement capability supported by the server;
receiving, by the server, a first request sent by the electronic device, wherein the first request comprises the first image, and the first image comprises the preset feature;
performing, by the server, enhancement processing on the first image based on the first request, to obtain a refined image that is of the first image and that is obtained after processing; and
sending, by the server, the refined image of the first image to the electronic device.

16. The method according to claim 15, wherein
the preset feature comprises at least one of the following: image content of an image belongs to a preset scene supported by the server and an image processing mode used for the image is an image processing mode supported by the server.

17. The method according to claim 15, wherein the first information comprises a detection algorithm plug-in, and the detection algorithm plug-in is used to detect whether an image comprises the preset feature.

18. The method according to claim 17, wherein the method further comprises:
receiving, by the server, an update request sent by the electronic device; and
sending, by the server, a detection algorithm plug-in of a latest version to the electronic device based on the update request.

19. The method according to claim 15, wherein the first image is a raw image captured by a camera of the electronic device, or the first image is an image obtained after image processing is performed on the raw image.

20. The method according to claims 15 to 19, wherein the first request indicates an image processing mode used for the first image; and performing, by the server, image processing on the first image based on the first request, to obtain the refined image of the first image comprises:
performing, by the server, image processing on the first image in the image processing mode used for the first image, to obtain the refined image of the first image.

21. The method according to claim 16, wherein
an image processing mode supported by the server comprises a fourth image processing mode and a fifth image processing mode, a preset scene supported by the server in the fourth image processing mode is different from a preset scene supported by the server in the fifth image processing mode, and the first information indicates a correspondence between the image processing mode and the preset scene that are supported by the server.

22. An electronic device, comprising a processor and a memory, wherein the memory is coupled to the processor, the memory is configured to store computer program code, the computer program code comprises computer instructions, and when the processor reads the computer instructions from the memory, the electronic device is enabled to perform the device-cloud collaborative image enhancement method according to claims 1 to 14.

23. A server, comprising a processor and a memory, wherein the memory is coupled to the processor, the memory is configured to store computer program code, the computer program code comprises computer instructions, and when the processor reads the computer instructions from the memory, the server is enabled to perform the device-cloud collaborative image enhancement method according to claims 15 to 21.

24. A computer-readable storage medium, comprising computer instructions, wherein when the computer instructions are run on a server, the server is enabled to perform the device-cloud collaborative image enhancement method according to claims 1 to 14 or claims 15 to 21.
